(19) Europäisches Patentamt
European Patent Office
Office européen des brevets

(11) EP 2 181 798 B1

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(51) Int Cl.:
***B23K 9/23*** *(2006.01)* ***B23K 9/173*** *(2006.01)*
***B23K 35/38*** *(2006.01)*

(21) Anmeldenummer: **09013705.0**

(22) Anmeldetag: **30.10.2009**

(54) **Verfahren zum Lichtbogenschweissen mit abschmelzender Elektrode**

Method for arc welding with melting electrode

Procédé de soudure à l'arc à l'aide d'une électrode fusible

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.10.2008 DE 102008054172**

(43) Veröffentlichungstag der Anmeldung:
**05.05.2010 Patentblatt 2010/18**

(73) Patentinhaber: **Linde AG**
**80331 München (DE)**

(72) Erfinder: **Matz, Christoph**
**85716 Unterschleißheim (DE)**

(74) Vertreter: **Gellner, Bernd et al**
**Linde AG**
**Patente und Marken**
**Dr.-Carl-von-Linde-Strasse 6-14**
**82049 Pullach (DE)**

(56) Entgegenhaltungen:
**EP-A1- 1 607 168**
**EP-A2- 1 714 728**
**WO-A1-98/34751**
**WO-A1-03/020465**
**US-A- 2 753 427**
**US-A- 2 958 756**
**US-A- 3 496 323**
**US-A- 4 626 646**

- **MENZEL M: "THE INFLUENCE OF INDIVIDUAL COMPONENTS OF AN INDUSTRIAL GAS MIXTURE ON THE WELDING PROCESS AND THE PROPERTIES OF WELDED JOINTS" WELDING INTERNATIONAL, TAYLOR & FRANCIS, ABINGDON, GB, Bd. 17, Nr. 4, 1. Januar 2003 (2003-01-01) , Seiten 262-264, XP001161844 ISSN: 0950-7116**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 181 798 B1

Printed by Jouve, 75001 PARIS (FR)

**Beschreibung**

Die vorliegende Erfindung betrifft Verfahren zum Lichtbogenschweißen mit abschmelzender Elektrode von unlegierten und schwach legierten Stählen.

Technischer Hintergrund

Es ist bekannt, Schweißdrähte (EN 440) G3Si1 oder G4Si1 zum Schweißen von unlegiertem Stahl bis zu einer Zugfestigkeit von etwa 600 MPa zu verwenden. Diese Drähte enthalten standardmäßig etwa 0,7 - 1,2% Si zur Desoxidation und um das Schmelzbad dünn fließend zu machen.

Somit enthalten diese Standard-Schweißzusatzwerkstoffe rund das Zehnfache an Silizium verglichen mit den zu schweißenden Grundwerkstoffen. Aufgrund des Mischungsverhältnisses des Schweißnahtmaterials von etwa 30% Grundwerkstoff plus 70% Zusatzwerkstoff beim MAG-Schweißen wird daher über den Schweißdraht das etwa 20 - 25-fache an Silizium in das Schweißnahtmaterial eingebracht, verglichen mit dem Beitrag des Grundwerkstoffes.

Die Schweißaufgabe wird im Allgemeinen unter einem Schutzgas (EN439) M21 mit 18% $CO_2$ in Argon ausgeführt, was zu starker Silikatbildung auf der Nahtoberfläche führt. Diese Silikate behindern nachfolgende Prozesse wie z.B. KTL-Beschichtung oder Grundierung, da an ihnen die Beschichtungen nicht haften bleiben. Es muss daher ein Arbeitsgang eingeschoben werden, um die Silikate zu entfernen, im Allgemeinen Sandstrahlen oder Schleifen.

Bekannt sind auch sog. LSi-Drähte mit abgesenktem (~ 0,2 - 0,4% Si) oder besonders niedrigem Silizium-Gehalt (0,05 - 0,1% Si). Diese werden momentan ausschließlich dort eingesetzt, wo nach dem Schweißen noch verzinkt oder emailliert wird, da sich sonst die höher siliziumhaltige Schweißnaht durchzeichnen würde, weil sich mehr Zink oder Emaille an ihr niederschlägt (Sandelin-Kurve). Die Schweißung wird weiterhin unter benanntem Schutzgas ausgeführt, um dem zähen Fließen des Schmelzbades und der hohen Porengefahr entgegen zu wirken, wobei immer noch Silikate an der Nahtoberfläche entstehen.

Die vorstehend genannte Technologie ist z.B. in: "Pomaska, Schutzgasschweißen, kein Buch mit 7 Siegeln, Infoschriften des Gemeinschaftsausschusses Verzinken e.V." beschrieben.

Die Entfernung der Silikate erfordert einen aufwendigen und kostenintensiven Zwischenschritt.

Der vorliegenden Erfindung liegt die Aufgabe zugrunde, die genannten Nachteile im Stand der Technik zu vermeiden. Insbesondere soll der teure Zwischenschritt zur Entfernung der Silikate eingespart werden, um die Wirtschaftlichkeit zu verbessern.

Um das Anhaften von Schlacken (Silikaten und Oxide anderer Bestandteile des Grundwerkstoffs und von Zusatzstoffen der Schweißelektrode wie Ni, Mo, Cr, Ti, Mn, etc) beim Schweißen von unlegierten und anderen legierten Stählen nach DIN EN 10020 (früher als "niedriglegierte Stähle" bezeichnet) zu verringern, schlägt die EP 1 714 728 A2 die Verwendung aktiver Schutzgase mit einem Volumenanteil von 0,01 - 0,5 % $CO_2$ oder $O_2$ vor, wobei Werte von 0,01 - 0,4 %, besonders 0,02 - 0,1 %, speziell 0,1 - 0,5 % bevorzugt werden, letzteres in einem Gemisch von Argon mit wenigstens 15 % Helium.

Ohne Bezug zur Schlackenbildung schlägt die US 4,871,898 allgemein für Stähle Mischungen von 2 - 12 % $CO_2$ und 20 - 45 % Helium vor, wobei die Untergrenze des $CO_2$-Anteils für niedriglegierte Stähle mit 8 % wesentlich höher angegeben wird.

Die EP 0 494 521 A1 erwähnt im Zusammenhang mit der vorstehenden Druckschrift eine Mischung von 1 % $CO_2$ und 30 % Helium für hochlegierte Stähle ("stainless steel") mit dem Handelsnamen HELISTAR SS.

Für hochlegierte Stähle ("superalloys") geht die EP 0 494 521 A1 zunächst von einer vorbekannten Mischung von 2,5 % $CO_2$ und über 85 % Helium aus, was zwar (wohl aufgrund des hohen Helium-Anteils) wenig Spritzer produziere, aber bei Nickelbasierten Legierungen zu starker Oxidation auf der geschweißten Metalloberfläche führe. Ferner diskutiert die Druckschrift eine Mischung von 1 % $CO_2$ und 30 % Helium ebenfalls für hochlegierte Stähle ("stainless steel") mit dem Handelsnamen HELISTAR SS. Aus Versuchen mit 1,25 % $CO_2$ + 45 % He (Trial 1), 0,75 % $CO_2$ + 27 % He (Trial 2), 0,5 % $CO_2$ + 18 % He (Trial 3) sowie 0,25 % $CO_2$ + 9 % He (Trial 4) erkennt die Druckschrift das Abnehmen der Oxidation mit sinkendem $CO_2$-Anteil und kommt schließlich zu einer optimalen Mischung von 0,1 - 0,9 % $CO_2$ + 5 - 13 % He für hochlegierte Stähle, insbesondere dünne Bleche hieraus. Der Rest der Schutzgasmischung besteht jeweils aus Argon und Verunreinigungen.

In der WO 03/020465 A1 ist ein Verfahren beschrieben, gemäß dem die Bestandteile des Schweißzusatzes und/oder einer oder mehrere Bestandteile einer Schutzgasmischung einstellbar sind. Hierbei ist beispielsweise vorgesehen, bei einem Elektrodendurchmesser von 0,52 Zoll ein Gasgemisch mit 90% Argon und 10% $CO_2$ zu verwenden. Weiterhin ist eine Schutzgasmischung mit 35% Helium, 50% Argon und in etwa 15% $CO_2$ offenbart.

Aus der EP 1 714 728 A2 geht ein Verfahren zum Metallschutzgas (MSG)-Schweißen von unlegierten oder legierten hochfesten Stählen mit abschmelzender Elektrode hervor. Dieses Schutzgas soll zum überwiegenden Teil aus Argon oder einer Argon-Helium-Mischung bestehen und zwischen 0,01 bis 0,5 Vol.% $CO_2$ enthalten. Der Heliumanteil im Argon soll mindestens 15% betragen.

In der US 2 753 427 A wird ein Verfahren zum Schutzgasschweißen beschrieben. Gemäß diesem Verfahren enthält das Schutzgas 80% Helium, 15% Argon sowie 5% $CO_2$. Es kann auch vorgesehen werden, ein Schutzgasgemisch mit 40-80% Helium und 3-10% $CO_2$ zu verwenden. Der Siliziumanteil der Elektrode soll hierbei 0,25% betragen.

Aus der US 2 958 756 A geht ein Verfahren zum Schutzgasschweißen hervor. Gemäß diesem Verfahren soll ein Schutzgasgemisch verwendet werden, das 1-5% Sauerstoff ($O_2$) sowie 40-95% Helium und 31,5-95% Argon enthält. Als Elektrode wird hierbei eine Elektrode mit einem Siliziumgehalt von 0,25% verwendet.

In der US 3 496 323 A ist ein Verfahren zum Schutzgasschweißen beschrieben. Gemäß diesem Verfahren ist vorgesehen ein Schutzgas mit 1-15% $CO_2$, 60-80% Helium und 15-50% Argon zu verwenden. Dieses Verfahren wurde mit Elektroden mit einem Siliziumgehalt von 0,29-0,49% ausgeführt.

Aus der US 4 626,646 A geht ein Verfahren zum Schutzgasschweißen hervor. Mittels der darin verwendeten Schutzgasmischung soll eine schlackefreie Oberfläche bereitgestellt werden, die leicht zu lackieren ist. Das darin beschriebene Schutzgasgemisch enthält 1,75-2,25% Sauerstoff in Verbindung mit 0,25-3,25% $CO_2$ (z.B. Zusammenfassung) sowie 80% Helium und in etwa 20% Argon. Das Verfahren wurde mit einer Elektrode mit einem Siliziumanteil von 0,7% ausgeführt.

In der EP 1 607 168 A1 ist eine Vorrichtung zum Schweißen beschrieben, bei der vorgesehen ist, die Schutzgasmischungen vor Ort bereitzustellen.

Aus Menzel M., Welding International 2003, 17(4), S. 262-264 geht hervor, dass $CO_2$ zu einer geringeren Oxidation einer Schweißnahtoberfläche führt als Sauerstoff. Dies reduziert somit die Schlackebildung und Nachbearbeitung einer Schweißnaht.

In der WO 98/34751 A1 ist ein Schweißsystem und ein Verfahren zum Festlegen der Schweißparameter beschrieben.

Kurzfassung der Erfindung

Die Aufgabe der Erfindung besteht darin, für niedriglegierte Stähle ein Schweißverfahren, einen Schweißautomaten, eine Schutzgas-Mischvorrichtung und eine Schweißelektrode anzugeben, die es jeweils ermöglichen, bei gutem Schweißergebnis die Ablagerung von Schlacken, insbesondere Silikaten, auf der Nahtoberfläche zu minimieren.

Die Aufgabe wird durch die Merkmale der unabhängigen Ansprüche gelöst. Vorteilhafte Weiterbildungen bilden den Gegenstand der Unteransprüche.

Die Vorliegende Erfindung betrifft das Schweißen von unlegiertem und schwach legiertem Stahl. Als "schwach legierter Stahl" wird ein Stahl bezeichnet, dessen gesamte Legierungskomponenten maximal 6 Gew.% des Stahls und vorzugsweise nicht mehr als 5 Gew.% des Stahls betragen.

Gemäß einem ersten Gesichtspunkt der Erfindung wird ein Verfahren zum Lichtbogenschweißen von unlegierten oder schwach legierten Stählen mit abschmelzender Elektrode unter Schutzgas bereitgestellt, bei welchem das Schutzgas ein Gemisch ist, das wenigstens Helium und ein Aktivgas sowie ein weiteres Inertgas aufweist. Bei diesem Verfahren wird in Abhängigkeit des Si-Gehaltes eines als Elektrode verwendeten Schweißdrahtes die Zusammensetzung des Schutzgases bestimmt.

Wenn der Schweißdraht eine Normalelektrode ist, beträgt der Anteil des Aktivgases am Gesamtvolumen des Schutzgases mehr als 0,5 % bis 1,5 % beträgt und der Anteil des Heliums am Gesamtvolumen des Schutzgases beträgt mehr als 30 %.

Wenn der Schweißdraht einen verringertem bzw. mittlerem Si-Gehalt von insbesondere 0,2 % bis 0,4 % aufweist, beträgt der Anteil des Aktivgases am Gesamtvolumen des Schutzgases etwa 1 % bis etwa 5 %.

Wenn der Schweißdraht einen niedrigen Si-Gehalt von insbesondere 0,05 % bis 0,1 % aufweist, beträgt der Anteil des Aktivgases am Gesamtvolumen des Schutzgases 3 % bis 10 %.

Mit dem erfindungsgemäßen Verfahren werden geeignete Schutzgasmischungen für bestimmte Elektrodentypen zur Verfügung gestellt. Damit wird gelehrt, den Aktivgasanteil im Schutzgas in Abhängigkeit von dem Siliziumgehalt in der Schweißelektrode auszuwählen, um eine möglichst silikatfreie Nahtoberfläche zu erhalten.

Zudem ist es möglich den Helium-Anteil im Schutzgas in Abhängigkeit von dem Siliziumgehalt in der Schweißelektrode auszuwählen, um bei angepasstem Aktivgasgehalt zur Gewinnung einer möglichst silikatfreien Nahtoberfläche einen guten Wärmeeintrag und -übergang in wirtschaftlich vertretbaren Grenzen sicherzustellen.

Gemäß einem zweiten Gesichtspunkt der Erfindung wird ein Verfahren zum Lichtbogenschweißen von unlegierten oder schwach legierten Stählen mit abschmelzender Elektrode unter Schutzgas vorgeschlagen, bei welchem das Schutzgas ein Gemisch ist, das wenigstens Helium und ein Aktivgas sowie ein weiteres Inertgas aufweist, wobei der Anteil des Aktivgases am Gesamtvolumen des Schutzgases mehr als 0,5 % bis 1,5 % beträgt und der Anteil des Heliums am Gesamtvolumen des Schutzgases mehr als 30 % beträgt.

Mit einem solchen Verfahren wird die Zusammensetzung des Schutzgases so gewählt, dass bei Verwendung einer Normalelektrode mit einem Siliziumgehalt von 0,7 bis 1,2 % die Silikatbildung auf der Naht minimiert und trotzdem ein für eine sichere Schweißung ausreichender Wärmeübergang und -eintrag erzielt und die Spritzerneigung verringert werden kann.

Bei dem Ausführungsbeispiel gemäß dem zweiten Gesichtspunkt kann der Anteil des Aktivgases am Gesamtvolumen des Schutzgases wenigstens 0,8 % und/oder höchstens 1,2 %, vorzugsweise etwa 1 % betragen.

Der Anteil des Heliums am Gesamtvolumen des Schutzgases beträgt dann höchstens 70 %. Der Anteil des Heliums am Gesamtvolumen des Schutzgases beträgt wenigstens 40 %, insbesondere mehr als 45 %, und höchstens 60%, vorzugsweise etwa 50 %.

Gemäß einem dritten und nicht erfindungsgemässen Gesichtspunkt wird ein Verfahren zum Lichtbogenschweißen mit abschmelzender Elektrode unter Schutzgas beschrieben, bei welchem ein Schweißdraht mit verringertem bzw. mittlerem Si-Gehalt von insbesondere 0,2 % bis 0,4 % verwendet wird und das Schutzgas ein Gemisch ist, das wenigstens Helium und ein Aktivgas sowie ein weiteres Inertgas aufweist, wobei der Anteil des Aktivgases am Gesamtvolumen des Schutzgases 1 % bis 5 % beträgt.

Mit einem solchen Verfahren wird dem Siliziumgehalt des Schweißdrahtes in der Weise Rechnung getragen, dass bei geringerem Siliziumeintrag in die Schweißnaht als bei Verwendung einer Normalelektrode (mit höherem Siliziumgehalt) aufgrund eines höher gewählten Anteils an Aktivgas im Schutzgas ein besserer Wärmeübergang und -eintrag erzielt und die Spritzerneigung verringert werden kann bei weiterhin geringer Silikatbildung.

Bei dem Ausführungsbeispiel gemäß dem dritten Gesichtspunkt kann der Anteil des Aktivgases am Gesamtvolumen des Schutzgases 2 % bis 4 %, vorzugsweise etwa 3 % betragen.

Der Anteil des Heliums am Gesamtvolumen des Schutzgases beträgt dann 10 % bis 70 %, insbesondere 20 % bis 60 %, vorzugsweise 30 % bis 50 %, besonders bevorzugt etwa 40 %.

Gemäß einem vierten Gesichtspunkt der Erfindung wird ein Verfahren zum Lichtbogenschweißen mit abschmelzender Elektrode unter Schutzgas vorgeschlagen, bei welchem ein Schweißdraht mit niedrigem Si-Gehalt von 0,05 % bis 0,1 % verwendet wird und das Schutzgas ein Gemisch ist, das wenigstens Helium und ein Aktivgas sowie ein weiteres Inertgas aufweist, wobei der Anteil des Aktivgases am Gesamtvolumen des Schutzgases 3 % bis 10 % beträgt.

Mit einem solchen Verfahren wird dem Siliziumgehalt des Schweißdrahtes in der Weise Rechnung getragen, dass bei geringeren Siliziumeintrag in die Schweißnaht als bei Verwendung einer Normalelektrode oder einer Mittel-Si-Elektrode aufgrund eines höher gewählten Anteils an Aktivgas im Schutzgas ein noch besserer Wärmeübergang und -eintrag erzielt und die Spritzerneigung verringert werden kann bei weiterhin geringer Silikatbildung.

Bei dem Ausführungsbeispiel gemäß dem vierten Gesichtspunkt kann der Anteil des Aktivgases am Gesamtvolumen des Schutzgases 4 % bis 7,5 %, vorzugsweise etwa 5 % betragen.

Der Anteil des Heliums am Gesamtvolumen des Schutzgases beträgt dann 10 % bis 70 %, insbesondere 20 % bis 50 %, vorzugsweise etwa 30 %.

Gemäß dem erfindungsgemäßen Verfahren werden ausschließlich Schweißdrähte mit einem Siliziumgehalt von 0,7 bis 1,2 %, und mit einem Si-Gehalt von 0,05 % bis 0,1 % verwendet.

Gemäß einem fünften Gesichtspunkt der Erfindung wird ein Verfahren zum Lichtbogenschweißen mit abschmelzender Elektrode unter Schutzgas vorgeschlagen, bei welchem das Schutzgas ein Gemisch ist, das wenigstens Helium und ein Aktivgas sowie ein weiteres Inertgas aufweist, wobei der Anteil des Aktivgases (und des Heliums) in dem Schutzgas in Abhängigkeit von dem Siliziumgehalt des Schweißdrahts bestimmt wird.

Mit einem solchen Verfahren wird der Siliziumgehalt des Schweißdrahtes derart berücksichtigt, dass der Aktivgasanteil an das Ausmaß des Siliziumeintrags in die Schweißnaht angepasst werden kann und daher sowohl die Silikatbildung auf der Schweißnaht minimiert bzw. beseitigt werden kann und dennoch ein optimaler, d.h., größtmöglicher Wärmeübergang und -eintrag erzielt werden kann bei verringerter Spritzerneigung.

Vorzugsweise werden die Obergrenze und die Untergrenze des Aktivgasanteils und/oder des Helium-Anteils durch Interpolation von Randpunkten experimentell ermittelter Bereiche bestimmt oder werden Aktivgasanteil und/oder Helium-Anteil durch Interpolation oder von experimentell ermittelten Optimumpunkten ausgewählt.

Auswahlbereiche können durch den jeweils größten Stützwert der oberen Interpolationslinie nach oben und durch den jeweils kleinsten Stützwert der unteren Interpolationslinie nach unten begrenzt sein. Zum Zwecke einer schnelleren Konvergenz kann es sinnvoll sein, die Stützpunkte der Interpolationslinien zu den Optimumpunkten hin zu verschieben, um so die Auswahlbereiche zu verengen.

Die in diesem Gesichtspunkt erwähnten Interpolationslinien können beispielsweise als Streckenzug, als natürlicher, stetiger, monotoner und nichtnegativer Spline, als stetige, monotone und nichtnegative, insbesondere quadratische Bezierkurve oder dergleichen bestimmt sein.

Bei den vorgenannten Verfahren können Prüfschritte vorgesehen sein, bei denen der Aktivgasanteil und/oder der Heliumanteil auf einen gemäß der jeweils angegebenen Vorschrift ausgewählten Wert eingestellt und dann nach Testschweißung und Prüfung der Schweißnaht auf Silikatablagerung und/oder sonstiger Qualitätsmerkmale innerhalb der jeweils angegebenen Grenzen iterativ variiert werden, bis annehmbare Ergebnisse erreicht sind.

Die Obergrenze des Aktivgasanteils kann durch eine obere Interpolationslinie (Max_AG) gebildet werden und die Untergrenze des Aktivgasanteils kann durch eine untere Interpolationslinie (Min_AG) gebildet werden, die jeweils wenigstens die in nachstehender Tabelle angegebenen Stützpunkte (P1-P3, P4-P6) aufweisen:

| | Max_AG | | | Min_AG | | |
|---|---|---|---|---|---|---|
| | P1 | P2 | P3 | P4 | P5 | P6 |
| w_Si [%] | 0,1 | 0,4 | 1,2 | 0,05 | 0,2 | 0,7 |
| v_AG [%] | 10 | 5 | 1,5 | 3 | 1 | 0,5 |

wobei w_Si der Anteil des Siliziums an der Gesamtmasse des Materials des Schweißdrahts in % ist und v_AG der Anteil des Aktivgases an dem Gesamtvolumen des Schutzgases in % ist.

Die Obergrenze des Aktivgasanteils kann durch eine obere Interpolationslinie (Max_AG') gebildet werden und die Untergrenze des Aktivgasanteils kann durch eine untere Interpolationslinie (Min_AG') gebildet werden, die jeweils wenigstens die in nachstehender Tabelle angegebenen Stützpunkte (P1'-P3', P4'-P6') aufweisen:

| | Max_AG' | | | Min_AG' | | |
|---|---|---|---|---|---|---|
| | P1' | P2' | P3' | P4' | P5' | P6' |
| w_Si [%] | 0,1 | 0,4 | 1,2 | 0,05 | 0,2 | 0,7 |
| v_AG [%] | 7,5 | 4 | 1,2 | 4 | 2 | 0,8 |

wobei w_Si der Anteil des Siliziums an der Gesamtmasse des Materials des Schweißdrahts in % ist und v_AG der Anteil des Aktivgases an dem Gesamtvolumen des Schutzgases in % ist.

Die Obergrenze des Aktivgasanteils kann durch eine obere Interpolationslinie (Max_AG") gebildet werden und die Untergrenze des Aktivgasanteils kann durch eine untere Interpolationslinie (Min_AG") gebildet werden, die jeweils wenigstens die in nachstehender Tabelle angegebenen Stützpunkte (P1"-P3", P4"-P6") aufweisen:

| | Max_AG" | | | Min AG" | | |
|---|---|---|---|---|---|---|
| | P1" | P2" | P3" | P4" | P5" | P6" |
| w_Si [%] | 0,1 | 0,4 | 1,2 | 0,05 | 0,2 | 0,7 |
| v_AG [%] | 5 | 3 | 1 | 5 | 3 | 1 |

wobei w_Si der Anteil des Siliziums an der Gesamtmasse des Materials des Schweißdrahts in % ist und v_AG der Anteil des Aktivgases an dem Gesamtvolumen des Schutzgases in % ist.

Der Aktivgasanteil kann durch den jeweils größten Stützwert der oberen Interpolationslinie (Max_AG, Max_AG', Max_AG") nach oben und durch den jeweils kleinsten Stützwert der unteren Interpolationslinie (Min_AG", Min AG", Min_AG") nach unten begrenzt sein.

Der Aktivgasanteil kann durch eine Interpolationslinie (Opt_AG) bestimmt werden, die wenigstens die in nachstehender Tabelle angegebenen Stützpunkte (P_C, P_B, P_A) aufweist:

| | OPT_AG | | |
|---|---|---|---|
| | P_C | P_B | P_A |
| w_Si [%] | 0,075 | 0,3 | 0,95 |
| v_AG[%] | 5 | 3 | 1 |

wobei w_Si der Anteil des Siliziums an der Gesamtmasse des Materials des Schweißdrahts in % ist und v_AG der Anteil des Aktivgases an dem Gesamtvolumen des Schutzgases in % ist.

Der Anteil des Heliums am Gesamtvolumen des Schutzgases kann 10 % bis 70 % betragen.

Der Anteil des Heliums in dem Schutzgas wird in Abhängigkeit von dem Siliziumgehalt des Schweißdrahts bestimmt.

Die Obergrenze des Heliumanteils kann durch eine Gerade (Max_He) begrenzt werdem, die der Gleichung

$$v_He = a \times w_Si + b$$

gehorcht, wobei a = 30,77 und b = 48,46 % vorzugsweise 38,46 %, und die Untergrenze des Heliumanteils kann durch eine Gerade (Min_He) begrenzt werden, die der Gleichung

$$v_He = c \times w_Si + d$$

gehorcht, wobei c = 18,18 und d = 8,18 %, vorzugsweise 18,18 %.

Der Heliumanteil kann durch eine Interpolationslinie (Opt_He) bestimmt werden, die wenigstens die in nachstehender Tabelle angegebenen Stützpunkte aufweist,:

| | OPT_He | | |
|---|---|---|---|
| | Q_C | Q_B | P_A |
| w_Si [%] | 0,075 | 0,3 | 0,95 |
| v_He [%] | 30 | 40 | 50 |

Der Heliumanteil kann durch eine Gerade (Opt_He') bestimmt werden, die der Gleichung

$$v_He = e \times w_Si + f$$

gehorcht, wobei e = 22,86 und f = 28,29 %.

Die Interpolationslinien der unterschiedlichen Gesichtspunkte der vorliegenden Erfindung können auch als Streckenzug, als natürlicher, stetiger, monotoner und nichtnegativer Spline, oder als stetige, monotone und nichtnegative, insbesondere quadratische Bezierkurve bestimmt sein.

Das erfindungsgemäße Verfahren nach einem der obigen Gesichtspunkte kann einen Schlackenprüfschritt umfassen, bestehend aus:

- Einstellen des Aktivgasanteils auf einen gemäß der jeweils angegebenen Vorschrift ausgewählten Wert; und
- iteratives Durchführen einer Testschweißung mit dem zu schweißenden Werkstoff, Prüfen der Schweißnaht auf Schlackeablagerungen sowie gegebenenfalls Variieren des Aktivgasanteils innerhalb der jeweils angegebenen Grenzen, bis die Schlackeablagerung annehmbar ist.

Das erfindungsgemäße Verfahren nach einem der obigen Gesichtspunkte kann einen Qualitätsprüfschritt umfassen, bestehend aus:

- Einstellen des Heliumanteils auf einen gemäß der jeweils angegebenen Vorschrift ausgewählten Wert; und
- iteratives Prüfen sonstiger Qualitätsmerkmale der Schweißnaht und gegebenenfalls Variieren des Heliumanteils innerhalb der angegebenen Grenzen, bis die gewünschte oder maximal erzielbare Qualität erreicht ist.

Das erfindungsgemäße Verfahren nach dem fünften Gesichtspunkte kann zusätzlich folgende Schritte umfassen:

- manuelles Eingeben des Siliziumgehalts des verwendeten Schweißdrahts; und
- automatisches Einstellen des Aktivgasgehalts und/oder des Heliumanteils des Aktivgases in Abhängigkeit von dem Siliziumgehalt des Schweißdrahts.

Das erfindungsgemäße Verfahren nach dem fünften Gesichtspunkte kann alternativ folgende Schritte umfassen:

- automatisches Erkennen des Siliziumgehalts des verwendeten Schweißdrahts; und
- automatisches Einstellen des Aktivgasgehalts und/oder des Heliumanteils des Aktivgases in Abhängigkeit von dem Siliziumgehalt des Schweißdrahts.

Die eben beschriebenen Verfahren nach dem ersten bis zum fünften Gesichtspunkt der vorliegenden Erfindung stellen jeweils einen eigenständigen Erfindungsgedanken dar, die einzeln oder auch in beliebiger Kombination angewendet werden können.

Mit den Verfahren gemäß dem dritten bis fünften Gesichtspunkt der vorliegenden Erfindung werden vorzugsweise unlegierte Stähle oder schwach legierte Stähle geschweißt.

Das Schutzgas, nach einem der oben genannten Gesichtspunkte, kann zusätzlich stickstoffhaltige Verbindungen, wie z.B. $N_2$, NO, $N_2O$ $NO_2$, im Bereich von bis zu 5000 ppm aufweisen. Zur zusätzlichen Verbesserung des Wärmeübergangs und zur Reduktion der Silikate kann noch gasförmiger Wasserstoff ($H_2$) im Bereich von 1 bis 5 Vol.-% vorgesehen sein.

Gemäß einem weiteren Gesichtspunkt der vorliegenden Erfindung wird eine Schutzgas-Herstellungsvorrichtung vorgeschlagen, aufweisend: jeweilige Vorratsbehälter wenigstens für ein Aktivgas, Helium und ein weiteres Inertgas in gasförmigem, flüssigem oder festem Aggregatzustand; eine Dosiereinrichtung zum Dosieren der aus den Vorratsbehältern zugeführten Gase; und eine Steuereinrichtung zum Ansteuern der Dosiereinrichtung, um die Volumenanteile der jeweiligen Gase entsprechend vorgegebenen Werten selbsttätig zu regulieren, wobei die Steuereinrichtung eine Empfangseinrichtung, die angepasst ist, ein einem Siliziumanteil eines Schweißdrahts entsprechendes Signal zu empfangen, und eine Verarbeitungseinrichtung, die angepasst ist, in Abhängigkeit von dem empfangenen Signal Vorgabewerte für die Volumenanteile der jeweiligen Gase zu ermitteln, wobei die Verarbeitungseinrichtung vorzugsweise angepasst ist, den Vorgabewert für den Aktivgasanteil und/oder den Heliumanteil gemäß einem Verfahren des vorstehend beschriebenen Gesichtspunkts zu ermitteln.

Die Steuereinrichtung kann eine Anzeigeeinrichtung zum Anzeigen von Soll- und/oder Istwerten des Aktivgasanteils und/oder des Heliumanteils aufweisen.

Die Steuereinrichtung kann eine Silizium-Eingabeeinrichtung zum Eingeben des Siliziumanteils des Schweißdrahts aufweisen.

Die Steuereinrichtung kann eine Speichereinrichtung zum Speichern von Siliziumanteilen verschiedener Schweißdrahttypen und eine Auswahleinrichtung zum Auswählen eines aus mehreren Schweißdrahttypen aufweisen.

Die Steuereinrichtung kann eine Aktivgas-Justiereinrichtung zum manuellen Nachjustieren des Vorgabewerts für den Aktivgasanteil und/oder eine Helium-Justiereinrichtung zum manuellen Nachjustieren des Vorgabewerts für den Heliumanteil aufweisen.

Die Steuereinrichtung kann ferner eine Aktivgas-Auswahleinrichtung zum manuellen Auswählen eines oder mehrerer aus einer Mehrzahl von bevorrateten Aktivgasen oder eines Mischungsverhältnisses aus diesen aufweisen.

Die Schutzgas-Herstellungsvorrichtung kann eine Überrangeinrichtung zum Deaktivieren der Steuereinrichtung oder der Verarbeitungseinrichtung zum Berechnen der Vorgabewerte in Abhängigkeit von dem Siliziumanteil aufweisen.

Mit einer solchen Schutzgas-Herstellungsvorrichtung ist es möglich, in Abhängigkeit von dem Siliziumanteil eines Schweißdrahts ein Schutzgas selbsttätig zu erzeugen, das hinsichtlich der Silikatbildung auf der Naht optimiert ist bzw. silikatfreies Schweißen ermöglicht und hinsichtlich Wärmeeintrag und -übertragung bestmöglich ausgelegt ist.

Wenn die Steuereinrichtung eine Silizium-Eingabeeinrichtung zum Eingeben des Siliziumanteils des Schweißdrahts aufweist, kann der Bediener durch einfaches Eingeben des Siliziumanteils für ein optimal eingestelltes Schutzgas sorgen.

Wenn die Steuereinrichtung eine Speichereinrichtung zum Speichern von Siliziumanteilen verschiedener Schweißdrahttypen und eine Auswahleinrichtung zum Auswählen eines aus mehreren Schweißdrahttypen aufweist, kann der Bediener ferner durch einfaches Auswählen des Schweißdrahttyps für ein optimal eingestelltes Schutzgas sorgen.

Durch Justiereinrichtungen zum manuellen Nachjustieren der Vorgabewerte für den Aktivgasanteil und/oder den Helium-Anteil kann das Ergebnis der Schweißung optimiert werden.

Bevorzugt ist vorgesehen, dass die Schutzgas-Herstellungsvorrichtung eine Überrangeinrichtung zum Deaktivieren der Steuereinrichtung oder der Berechnungslogik zum Berechnen der Vorgabewerte in Abhängigkeit von dem Siliziumanteil aufweist. Damit wird ermöglicht, eine Schutzgasmischung durch manuelle Vorgabe der Sollwerte oder durch manuelle Betätigung der Dosiereinrichtung auch dann einzustellen, wenn ein unbekannter Schweißdrahttyp oder ein Schweißdraht mit unbekanntem Siliziumanteil verwendet wird oder wenn Materialien verschweißt werden sollen, für welche die Vorgabe anhand des Siliziumanteils keine Vorteile bringt.

Gemäß einem weiteren Gesichtspunkt wird eine Schweißvorrichtung vorgeschlagen, die eine Schutzgas-Herstellungseinrichtung gemäß dem vorstehend erwähnten Gesichtspunkt aufweist. Die Schweißvorrichtung kann ein Schweißautomat sein.

Die Schweißvorrichtung kann eine Erkennungseinrichtung zum Erkennen des Typs oder des Siliziumgehalts des Schweißdrahts und eine Ausgabeeinrichtung zum Ausgeben eines das Erkennungsmerkmal wiedergebenden Signals aufweisen. Damit ist eine automatische Einstellung der Schutzgasmischung in Abhängigkeit von dem Siliziumgehalt der Schweißelektrode im Hinblick auf eine silikatfreie Schweißnaht möglich.

In allen Gesichtspunkten der Erfindung wird durch geschickte Kombination des Standard- oder eines LSi-Drahtes mit einem Schutzgas, dessen aktiver Bestandteil soweit abgesenkt wird, bis keine Silikate mehr an der Nahtoberfläche entstehen, und in das gleichzeitig Helium eingemischt wird, um den Wärmeübergang zu verbessern und somit der Porengefahr und einem zähen Fließen des Schmelzbades entgegen zu wirken, eine problemlose Verschweißung dieser Drahttypen ermöglicht und gleichzeitig das Problem mit den Oberflächensilikaten gelöst.

Dadurch werden diese Draht/Gas-Kombinationen für alle Industrien interessant, die sich das lästige Entfernen der Silikate einsparen wollen, insbesondere Massenproduzenten wie z.B. die Automobil- und deren Zulieferindustrie.

Weitere Gesichtspunkte, Vorteile und Merkmale der vorliegenden Erfindung werden aus der nachstehenden genauen Beschreibung und zeichnerischen Darstellung bevorzugter Ausführungsbeispiele ersichtlich werden.

Fig. 1A ist ein Diagramm, in welchem vorteilhafte Bereiche des Aktivgasanteils eines Schutzgases in Abhängigkeit von dem Siliziumgehalt dargestellt ist.

Fig. 1B ist ein Diagramm, in welchem die vorteilhaften Bereiche aus Fig. 1A durch Interpolationslinien angenähert und verallgemeinert sind.

Fig. 1C ist ein Diagramm, in welchem die vorteilhaften Bereiche aus Fig. 1A durch lineare Interpolation angenähert und verallgemeinert sind.

Fig. 2A ist ein Diagramm, in welchem vorteilhafte Bereiche des Heliumanteils des Schutzgases in Abhängigkeit von dem Siliziumgehalt dargestellt ist.

Fig. 2B ist ein Diagramm, in welchem die vorteilhaften Bereiche aus Fig. 1A durch lineare Interpolation angenähert und verallgemeinert sind.

Fig. 3 ist ein Diagramm, in welchem die vorteilhaften Bereiche aus den Fign. 1A und 2A in einem Koordinatensystem dargestellt sind, das von dem Aktivgasanteil eines Schutzgases und seinen Heliumanteil gebildet ist.

Fig. 4 ist ein Ablaufdiagramm eines Prozesses einer Bestimmung des Schutzgasgemischs gemäß der Erfindung.

Fig. 5 ist ein Ablaufdiagramm eines Prozesses einer Bestimmung des Schutzgasgemischs einschließlich einer Prüfroutine.

Fig. 6 ist eine schematische Darstellung einer Schweißeinrichtung mit Schutzgas-Herstellungsvorrichtung gemäß der Erfindung.

Fig. 7 ist ein Blockschaubild einer Steuereinheit der Schutzgas-Herstellungsvorrichtung gemäß der Erfindung.

Fig. 8 ist eine Darstellung einer Anzeige- und Eingabeeinheit der Schutzgas-Herstellungsvorrichtung gemäß der Erfindung.

Fig. 9 ist eine Darstellung eines Kopfes eines Schweißautomaten gemäß der Erfindung.

Der Erfinder der vorliegenden Erfinderung hat Versuche mit verschiedenen Schweißdrähten angestellt mit dem Ziel, beim Lichtbogenschweißen mit abschmelzender Elektrode weitgehend schlackefreie Schweißnähte zu erzeugen. Der Schwerpunkt wurde dabei auf Schweißungen an dünnen Blechen bis etwa 5 mm Stärke aus unlegiertem und schwach legiertem Stahl gelegt. Als Schutzgas wurden Mischungen von Argon mit einem Aktivgas ($CO_2$ oder $O_2$ oder ein Gemisch hieraus) und Helium verwendet.

Bei vergleichsweise niedrigen Anteilen von Aktivgas im Schutzgas bildeten sich besonders schlackearme Schweißnähte. Bei stark abgesenktem Aktivgasanteil war es jedoch erforderlich, den Heliumanteil im Schutzgas zu erhöhen, um den Wärmeeintrag in die Schweißnaht und die Wärmeübertragung zu verbessern. Aus Kostengründen strebt man aber tendenziell an, den Heliumverbrauch gering zu halten. Für das Schweißschutzgas haben sich grundsätzlich folgende Zusammensetzungen als vorteilhaft erwiesen:

Heliumanteil: 10 - 70%, bevorzugt 20 - 60%, bes. insbesondere 30 - 50%
Aktivgasanteil ($O_2$/ $CO_2$): 0 - 10%, bevorzugt 0,5 - 8%, insbesondere 1 - 5%

Es wurden grundsätzlich drei Drahttypen mit unterschiedlichem Gehalt an Silizium (Si) verwendet. Überraschenderweise stellte sich heraus, dass der optimale Bereich für den Aktivgasanteil stark von dem verwendeten Drahttyp abhängt. Abhängig vom verwendeten Drahttyp wird nämlich das Ziel, silikatfrei zu schweißen, mit unterschiedlichen Gasgemischen erreicht, wobei tendenziell umso mehr Aktivgas ($CO_2$ oder $O_2$) im Schutzgasgemisch vorhanden sein darf, je weniger Silizium im Draht vorhanden ist. Die Ergebnisse lassen sich tabellarisch darstellen wie folgt:

| Drahttyp | Si-Gehalt [%] | Aktivgasanteil [% Vol] | Optimum [% Vol] |
|---|---|---|---|
| A | 0,7 - 1,2 | 0,5 - 1,5 | 1,0 |
| B | 0,2 - 0,4 | 1,0-5,0 | 3,0 |
| C | 0,05 -0,1 | 3,0 - 10,0 | 5,0 |

Wird ein Standard-Schweißdraht verwendet, der zwischen ca. 0,7 - 1,2% Si enthält, muss der Anteil des Aktivgases sehr niedrig gewählt werden (~ 0,5 - 1,5%), um die Silikatbildung verhindern zu können. Wird aufgrund des niedrigen Aktivgasanteils der Lichtbogen instabil oder ist der Einbrand nicht ausreichend, muss ein Schweißdraht mit geringerem Siliziumgehalt verwendet werden, um ein silikatfreies Schweißen bei höherem Aktivgasanteil zu ermöglichen (wie oben erläutert, kommt das Silizium fast ausschließlich über den Draht in die Schweißnaht). Mit einem Schweißdraht mit abgesenktem Si-Gehalt (~ 0,2 - 0,4% Si) kommen dann Gasgemische mit ca. 1 - 5% Aktivgasanteil zum Einsatz. Wird ein Schweißzusatz mit besonders niedrigem Si-Gehalt (~ 0,05 - 0,1% Si) verwendet, verschweißt man ihn unter Schutzgasgemischen mit ca. 3 - 10% Aktivgasanteil.

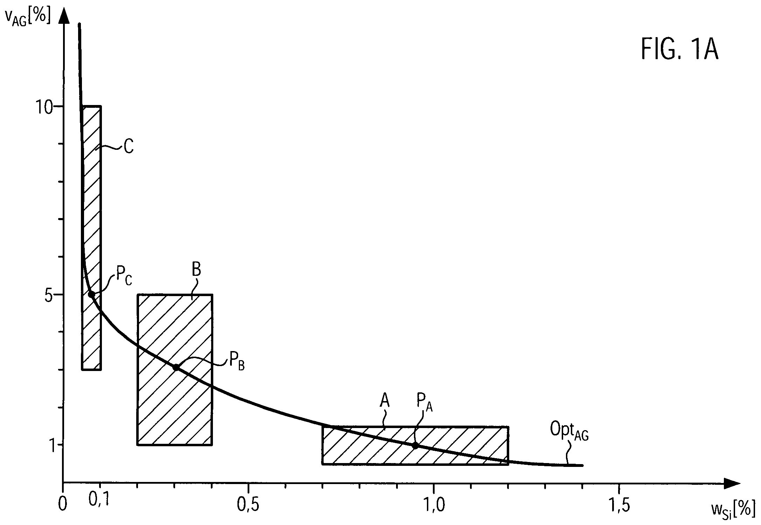

Dieser Zusammenhang ist in Fig. 1A schematisch dargestellt. Dort ist der Aktivgasanteil v_AG [%] am Volumen des Schutzgases über den Siliziumgehalt w_Si [%] der Drahtelektrode aufgetragen. Die jeweils ermittelten Bereiche für die verschiedenen Drahttypen sind darin schraffiert und mit den jeweiligen Typkennzeichen A, B und C bezeichnet. Die jeweiligen Optimumpunkte sind mit P_A, P_B und P_C bezeichnet und durch eine Optimumlinie Opt_AG miteinander verbunden.

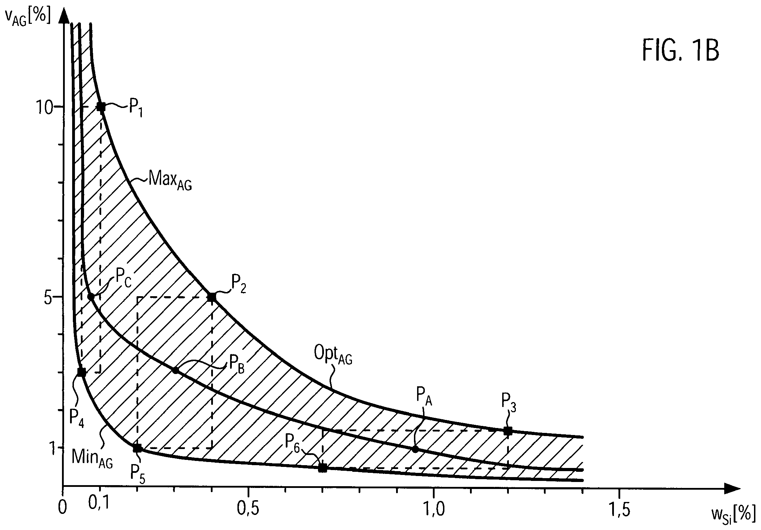

In Fig. 1B sind in einer ähnlichen Darstellung die vorstehend genannten Bereiche A, B und C nur schraffiert dargestellt mit dem Ziel, einen verallgemeinerten Auswahlbereich für den Aktivgasanteil v_AG zu bestimmen. Zu diesem Zweck werden die jeweiligen oberen rechten Eckpunkte P1, P2 und P3 der Bereiche C, B und A miteinander verbunden und darüber hinaus fortgesetzt, um eine Obergrenze Max_AG für den Auswahlbereich zu ermitteln. Gleichermaßen werden die jeweiligen unteren linken Eckpunkte P4, P5 und P6 der Bereiche C, B und A miteinander verbunden und darüber hinaus fortgesetzt, um eine Untergrenze Min_AG für den Auswahlbereich zu ermitteln. Der Auswahlbereich zwischen den beiden Kurven Max_AG und Min_AG wurde in der Figur schraffiert. Zur Orientierung ist auch die Optimumlinie Opt_AG eingezeichnet.

Die Linien Max_AG, Min_AG und Opt_AG sind in den Fign. 1A und 1B durch natürliche, stetige, monotone und nichtnegative Splines gebildet, die durch die jeweiligen Stützpunkte definiert sind. Die Stützstellen sind im Einzelnen in der nachstehenden Tabelle wiedergegeben:

| Linie | Max_AG | | | Opt_AG | | | Min_AG | | |
|---|---|---|---|---|---|---|---|---|---|
| Stützpunkt | P1 | P2 | P3 | P_C | P_B | P_A | P4 | P5 | P6 |
| w_Si [%] | 0,1 | 0,4 | 1,2 | 0,075 | 0,3 | 0,85 | 0,05 | 0,2 | 0,7 |
| v_AG [%] | 10 | 5 | 1,5 | 5 | 3 | 1 | 3 | 1 | 0,5 |

Weitere Stützpunkte, etwa geeignete Achsenabschnitte, können bei Bedarf hinzugezogen werden.

Statt einer Spline-Interpolation können auch andere Interpolationsarten Anwendung finden, wie etwa eine Bézier-Interpolation, die natürlich ebenfalls stetig, monoton und nichtnegativ sein muss. Bei drei Stützpunkten kommt eine quadratische Bezierkurve in Betracht.

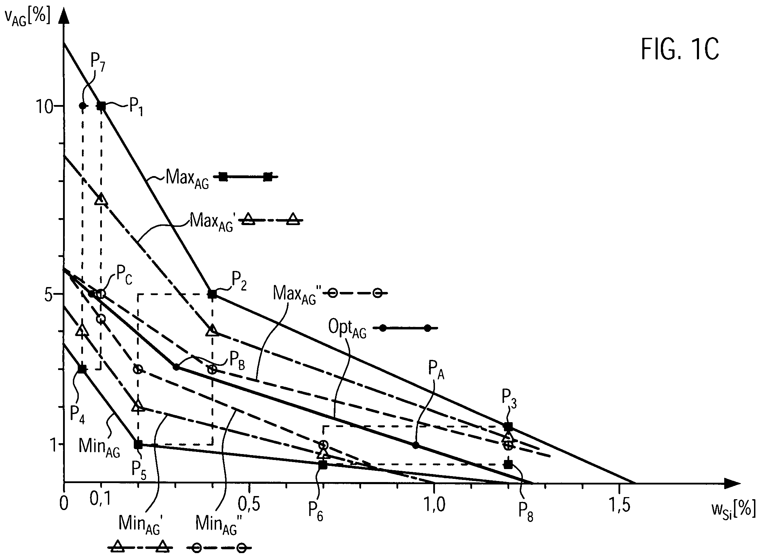

Als besonders einfache Interpolation ist in Fig. 1C eine lineare Interpolation dargestellt. Dabei wird die Obergrenze Max_AG für den Aktivgasanteil v_AG durch zwei von dem Stützpunkt P2 ausgehende, durch die Sützpunkte P1 bzw. P3 verlaufende Strahlen gebildet, wird die Untergrenze Min_AG für den Aktivgasanteil v_AG durch zwei von dem Stützpunkt P5 ausgehende, durch die Sützpunkte P4 bzw. P6 verlaufende Strahlen gebildet, und wird die Optimumlinie Opt_AG für den Aktivgasanteil v_AG durch zwei von dem Stützpunkt P_B ausgehende, durch die Sützpunkte P_C bzw. P_A verlaufende Strahlen gebildet. Der hierdurch definierte Auswahlbereich ist jeweils durch die Koordinatenachsen begrenzt, da Stoffanteile nicht negativ werden können.

Der Auswahlbereich kann alternativ durch die in den Experimenten aufgetretenen größten und kleinsten Siliziumanteile w_Si und Aktivgasanteile v_AG begrenzt werden. Dies wird in der Figur 1C dadurch symbolisiert, dass Bereiche außerhalb der jeweiligen Extrempunkte P7 und P8 nur gepunktet schraffiert sind. Das heißt, in diesem Fall wird der Auswahlbereich für den Aktivgasanteil v_AG durch ein geschlossenes Vieleck gebildet, das durch die Punkte P1, P2, P3, P8, P6, P5, P4 und P7 definiert ist. Die Koordinaten der Extrempunkte P7 und P8 sind in nachstehender Tabelle wiedergegeben:

| Punkt | P7 | P8 |
|---|---|---|
| w_Si [%] | 0,05 | 1,2 |
| v_AG [%] | 10 | 0,5 |

Um ferner im Prozessablauf eine größere Treffsicherheit und schnellere Konvergenz bei der Auswahl des Aktivgasanteils v_AG zu erzielen, kann der Auswahlbereich auch verengt werden. Dies ist in der Figur durch Linien Max_AG' und Min_AG' angedeutet, die durch geeignet zum jeweiligen Optimumpunkt P_C, P_B bzw. P_A hin versetzte Stützpunkte verlaufen. Ein weiter verengter Auswahlbereich wird durch die Linien Max_AG" und Min_AG" gebildet, bei denen die Stützpunkte auf der Höhe der Optimumpunkte liegen. In der Figur 1C sind die Stützpunkte der Linien Max_AG und Min_AG mit gefüllten Quadraten dargestellt, sind die Stützpunkte der Linien Max_AG' und Min_AG' durch leere Dreiecke dargestellt und sind die Stützpunkte der Linien Max_AG" und Min_AG" durch leere Kreise dargestellt. Die Stützpunkte der Linie Opt_AG sind mit gefüllten Kreisen dargestellt. Geeignete Stützpunkte sind für die Linien Max_AG' und Min_AG' sind in nachstehender Tabelle wiedergegeben:

| Linie | Max_AG' | | | Min_AG' | | |
|---|---|---|---|---|---|---|
| Stützpunkt | P1' | P2' | P3' | P4' | P5' | P6' |
| w_Si [%] | 0,1 | 0,4 | 1,2 | 0,05 | 0,2 | 0,7 |
| v_AG [%] | 7,5 | 4 | 1,2 | 4 | 2 | 0,8 |

Geeignete Stützpunkte für die Linien Max_AG" und Min_AG" sind in nachstehender Tabelle wiedergegeben:

| Linie | Max_AG" | | | Min_AG" | | |
|---|---|---|---|---|---|---|
| Stützpunkt | P1" | P2" | P3" | P4" | P5" | P6" |
| w_Si [%] | 0,1 | 0,4 | 1,2 | 0,05 | 0,2 | 0,7 |
| v_AG [%] | 5 | 3 | 1 | 5 | 3 | 1 |

Es versteht sich, dass die vorstehenden versetzten Stützpunkte auch zur Definition von Spline-oder anderen Interpolationskurven verwendet werden können.

Damit wird erstmals eine allgemeine Lehre bereitgestellt, den Aktivgasanteil v_AG im Schutzgas in Abhängigkeit von dem Siliziumgehalt in der Schweißelektrode auszuwählen, um eine möglichst silikatfreie Nahtoberfläche zu erhalten.

Da mit sinkendem Aktivgasanteil auch die Wärmeleitung, die Lichtbogenstabilität und der Einbrand zurückgehen, muss dem Schutzgasgemisch Helium zugegeben werden, um diese Effekte zu kompensieren. Abhängig von dem gewählten Aktivgasanteil bewegt sich der Heliumanteil zwischen 10 und 70%, wobei tendenziell umso mehr Helium beigemischt werden muss, je weniger Aktivgas vorhanden ist.

Bevorzugte Draht/Schutzgas-Kombinationen sind daher z.B.

| Drahttyp | Si-Gehalt [%] | Aktivgasanteil [% Vol] | Heliumanteil [% Vol] |
|---|---|---|---|
| A (Standard) | 0,7 - 1,2 | 1 | 50 |
| B (Mittel-Si) | 0,2 - 0,4 | 3 | 40 |
| C (Niedrig-Si) | 0,05 -0,1 | 5 | 30 |

Die angegebenen Werte für das Helium und das aktive Gas ($CO_2$) sind dabei als ungefähre Mittelwerte zu verstehen, die je nach dem tatsächlichen Si-Anteil und dem tatsächlichen Schweißergebnis, gegebenenfalls auch nach einem eventuellen Si-Anteil in dem Werkstoff selbst, zu variieren sind.

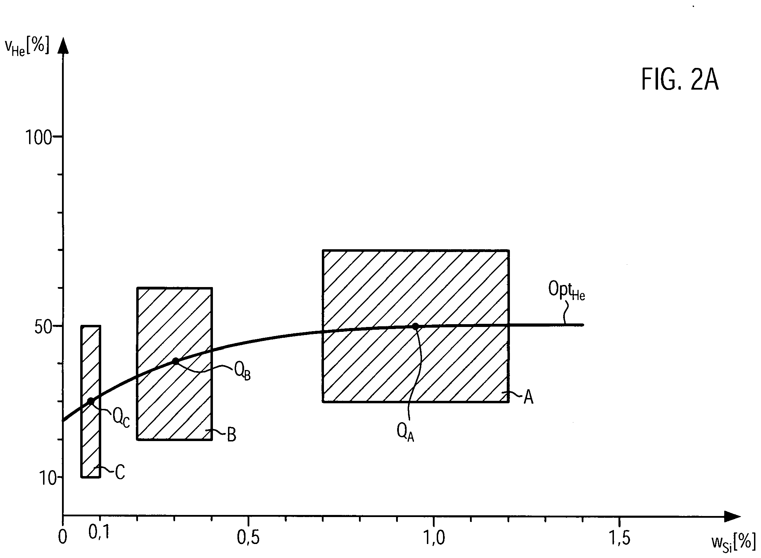

In Fig. 2A ist der oben beschriebene Zusammenhang schematisch dargestellt. Dort ist der Helium-Anteil v_He [%] am Volumen des Schutzgases über den Siliziumgehalt w_Si [%] der Drahtelektrode aufgetragen. Die jeweils ermittelten Bereiche für die verschiedenen Drahttypen sind darin schraffiert und mit den jeweiligen Typkennzeichen A, B und C bezeichnet. Die jeweiligen Optimumpunkte sind mit Q_A, Q_B und Q_C bezeichnet und durch eine interpolierte Optimumlinie Opt_He miteinander verbunden.

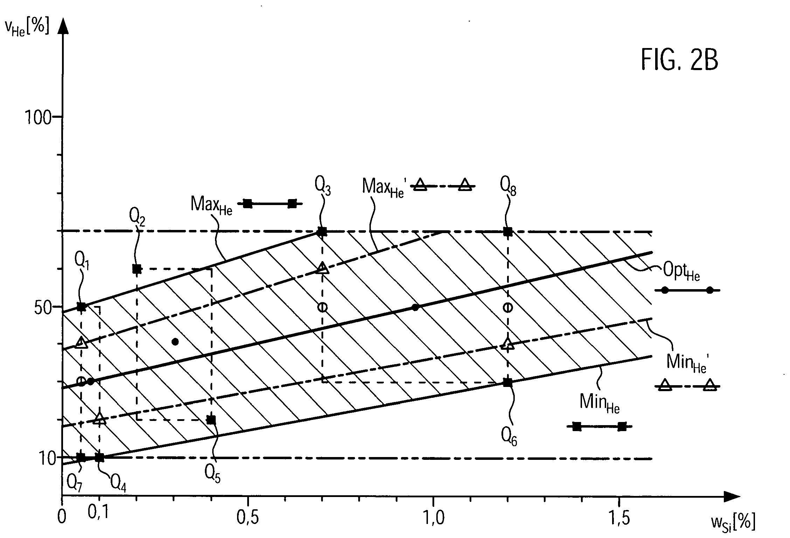

In Fig. 2B sind in einer ähnlichen Darstellung die vorstehend genannten Bereiche A, B und C nur schraffiert dargestellt mit dem Ziel, einen verallgemeinerten Auswahlbereich für den Helium-Anteil v_He zu bestimmen. Hier bietet es sich an, die Interpolation zu vereinfachen und lediglich die jeweiligen oberen linken Eckpunkte Q1 und Q3 der Bereiche C und A linear miteinander zu verbinden, um eine Obergrenze Max_He für den Auswahlbereich zu ermitteln. Gleichermaßen werden die jeweiligen unteren rechten Eckpunkte Q4 und Q6 der Bereiche C und A linear miteinander verbunden, um eine Untergrenze Min_He für den Auswahlbereich zu ermitteln. Der Auswahlbereich zwischen den beiden Kurven Max_He und Min_He wurde in der Figur schraffiert. Zur Orientierung ist auch eine linearisierte Optimumlinie Opt_He eingezeichnet, die ebenfalls nur die Optimumpunkte Q1 und Q3 der Bereiche C und A berücksichtigt.

Sofern eine genauere Anpassung an die experimentellen Werte gewünscht wird, werden bei der Interpolation wie bei der Bestimmung des Aktivgasanteils auch die jeweiligen Eckpunkte Q2 und Q4 des Bereichs B berücksichtigt. Eine weitere Verbesserung der Genauigkeit wird durch eine Spline-Interpolation oder Bezierkurve oder dergleichen erzielt.

Die zugehörigen Stützpunkte für die Bestimmung des Helium-Anteils sind in der nachstehenden Tabelle wiedergegeben:

| Linie Stützpunkt | Max_He | | | Opt_He | | | Min_He | | |
|---|---|---|---|---|---|---|---|---|---|
| | Q1 | Q2 | Q3 | Q_C | Q_B | Q_A | Q4 | Q5 | Q6 |
| w_Si [%] | 0,05 | 0,2 | 0,7 | 0,075 | 0,3 | 0,85 | 0,1 | 0,4 | 1,2 |
| v_He [%] | 50 | 60 | 70 | 30 | 40 | 50 | 10 | 20 | 30 |

Der hierdurch definierte Auswahlbereich ist jeweils grundsätzlich durch die Koordinatenachsen begrenzt, da Stoffanteile nicht negativ werden können.

Der Auswahlbereich kann alternativ durch die in den Experimenten aufgetretenen größten und kleinsten Siliziumanteile w_Si und Helium-Anteile v_He begrenzt werden. Dies wird in der Figur dadurch symbolisiert, dass Bereiche außerhalb der jeweiligen Extrempunkte Q7 und Q8 nur gestrichelt schraffiert sind. Das heißt, in diesem Fall wird der Auswahlbereich für den Helium-Anteil v_He durch ein geschlossenes Vieleck gebildet, das durch die Punkte Q1, Q2, Q3, Q8, Q6, Q5, Q4 und Q7 definiert ist. Die Koordinaten der Extrempunkte Q7 und Q8 sind in nachstehender Tabelle wiedergegeben:

| Punkt | Q7 | Q8 |
|---|---|---|
| w_Si [%] | 0,05 | 1,2 |
| v_He [%] | 50 | 30 |

Um ferner im Prozessablauf eine größere Treffsicherheit und schnellere Konvergenz zu erzielen, kann wie bei der Auswahl des Aktivgasanteils der Auswahlbereich für den Helium-Anteil v_He auch verengt werden. Dies ist in der Figur 2B durch Linien Max_He' und Min_He' angedeutet, die durch geeignet zum jeweiligen Optimumpunkt P_C, P_B bzw. P_A hin versetzte Stützpunkte verlaufen. Ein weiter verengter Auswahlbereich ist bei linearer Interpolation mit zwei Stützstellen nicht sinnvoll, da sonst der Optimumpunkt Q_B außerhalb des Auswahlbereichs liegen würde, wie es aus der Figur 2B ersichtlich ist. Bei drei Stützstellen würde man eine weitere Verengung des Auswahlbereichs durch Stützpunkte auf der Höhe der Optimumpunkte jedoch in Betracht ziehen. In der Figur sind die Stützpunkte der Linien Max_He und Min_He mit gefüllten Quadraten dargestellt, sind die Stützpunkte der Linien Max_He' und Min_He' durch leere Dreiecke dargestellt und sind die Stützpunkte der Begrenzungslinien eines möglichen weiter verengten Auswahlbereichs durch leere Kreise dargestellt. Die Stützpunkte der Linie Opt_He sind mit gefüllten Kreisen dargestellt. Geeignete Stützpunkte sind für die Linien Max_He' und Min_He' in nachstehender Tabelle wiedergegeben:

| Linie Stützpunkt | Max_He' | | | Min_He' | | |
|---|---|---|---|---|---|---|
| | Q1' | Q2' | Q3' | Q4' | Q5' | Q6' |
| w_Si[%] | 0,05 | 0,2 | 0,7 | 0,1 | 0,4 | 1,2 |
| v_He [%] | 40 | 50 | 60 | 20 | 30 | 40 |

Geeignete Stützpunkte für die noch weiter verengende Begrenzungslinien sind in nachstehender Tabelle wiedergegeben:

| Stützpunkt | Q1" | Q2" | Q3" | Q4" | Q5" | Q6" |
|---|---|---|---|---|---|---|
| w_Si [%] | 0,05 | 0,2 | 0,7 | 0,1 | 0,4 | 1,2 |
| v_He [%] | 30 | 40 | 50 | 30 | 40 | 50 |

Damit wird erstmals eine allgemeine Lehre bereitgestellt, den Helium-Anteil v_He im Schutzgas in Abhängigkeit von dem Siliziumgehalt in der Schweißelektrode auszuwählen, um bei angepasstem Aktivgasgehalt zur Gewinnung einer möglichst silikatfreien Nahtoberfläche einen guten Wärmeeintrag und -übergang in wirtschaftlich vertretbaren Grenzen sicherzustellen.

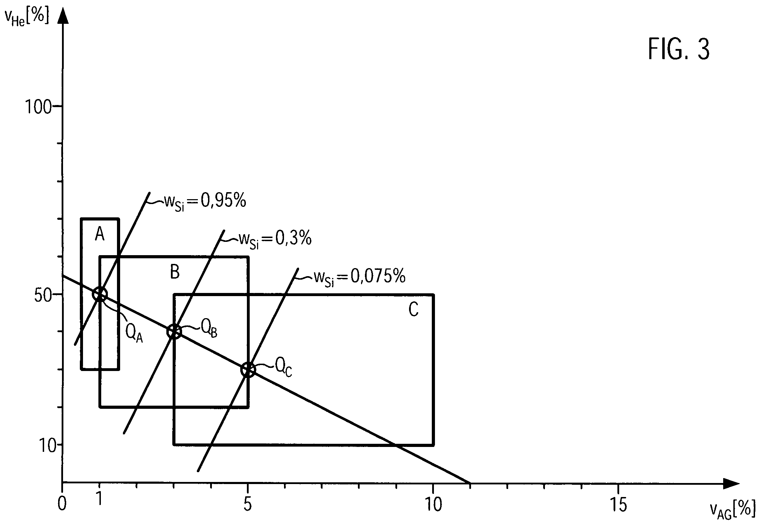

In Fig. 3 ist das Ergebnis der vorstehenden Diskussion in Form eines weiteren Diagramms wiedergegeben. Dort ist der Helium-Anteil v_He über dem Aktivgasanteil v_AG aufgetragen und die experimentell ermittelten Bereiche für die drei Drahttypen A, B und C eingezeichnet. Die Optimumpunkte dieser Bereiche sind als Kreise eingezeichnet und als R_A, R_B und R_C bezeichnet. Durch diese Optimumpunkte ist eine Mittellinie M definiert, die grundsätzlich in oben diskutierter Weise durch Interpolation gewonnen wird, aber vorliegend in jedem Fall zu einer Gerade führt. In den Optimumpunkten Q_A, Q_B und Q_C ist jeweils der zugehörige Siliziumgehalt w_Si in der Drahtelektrode bekannt. Dies erlaubt eine Parametrisierung des Siliziumgehalts w_Si auf der Mittellinie M, was bei bekanntem w_Si einen direkten Anhaltspunkt für sowohl den Aktivgasanteil v_AG als auch den Helium-Anteil v_He gibt. Hiervon ausgehend ist beispielsweise eine Feinanpassung beider Anteile entlang der Normalen auf der Mittellinie M denkbar.

Um Probleme mit fehlerhaften Schweißnähten zu vermeiden, ist es bevorzugt, möglichst den Schweißdraht mit einem hohen Si-Gehalt zu wählen, da Silizium für ein gutes Fließen und Benetzen des Schmelzbades sorgt und dessen Entgasen begünstigt.

Außerdem können bei Verwendung von Standard-Schweißdrähten keine Produktverwechslungen vorkommen, es wird kein zusätzlicher Vorrat und Lagerraum für ihn benötigt, und sie sind billiger als die Sondergüter mit niedrigerem Si-Gehalt.

Daher sind für dieses Schweißverfahren die Draht/Gas-Kombinationen unter Verwendung eines Standarddrahtes bevorzugt:

- Standarddraht (~ 0,7 - 1,2% Si) + Schutzgas 30-50% He + 0,5 - 1,5% $CO_2$ + Argon

Anhand der vorstehenden Überlegungen können geeignete Schutzgasmischungen für bestimmte Elektrodentypen zur Verfügung gestellt werden.

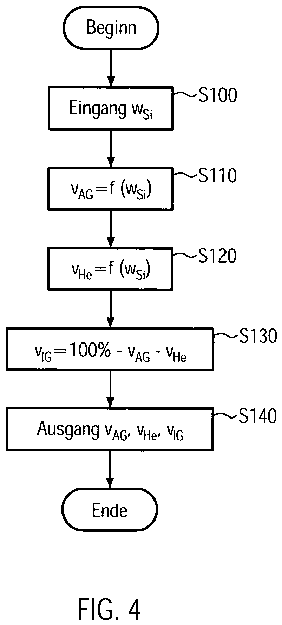

Es können aber auch vor Ort anhand der hier angegebenen Lehre geeignete Schutzgase aus Einzelbestandteilen zusammengemischt werden. Fig. 4 zeigt in Form eines Ablaufdiagramms die grundsätzliche Vorgehensweise beim Zusammenmischen einer geeigneten Schutzgasmischung.

In Schritt S100 wird der Siliziumgehalt w_Si der Drahtelektrode eingegeben.

In Schritt S110 wird der Aktivgasanteil v_AG als Funktion des Siliziumgehalts w_Si ermittelt; sodann wird in Schritt S120 der Helium-Anteil v_He als Funktion des Siliziumgehalts w_Si ermittelt. Die beiden Schritte S110 und S120 können in einem Schritt zusammengefasst sein.

In Schritt S130 wird der Anteil v_IG eines weiteren Inertgases als verbleibender Anteil ermittelt.

Sodann werden in Schritt S140 die ermittelten Anteile ausgegeben.

Damit endet der Ablauf; die ermittelten Anteile werden dann an einer Mischeinrichtung oder durch Drosselung entsprechender Drosseleinrichtungen in den Zufuhrleitungen der einzelnen Gase eingestellt.

Es versteht sich, dass die Ermittlung des Aktivgasanteils v_AG und des Helium-Anteils v_He als Funktion des Siliziumgehalts w_Si auf jedwede Überlegung zurückgreifen kann, die vorstehend zur Bestimmung der jeweiligen Auswahlbereiche diskutiert wurde. Insbesondere kann die Ermittlung der Anteile auf Wertetabellen zurückgreifen, die anhand der Diagramme in den Fign. 1A bis 3 angefertigt wurden und in Tabellenform schriftlich oder in einem Speicher einer Recheneinheit vorliegen, oder auf Rechenvorschriften, die anhand der oben beschriebenen Interpolationsroutinen definiert wurden und in Diagrammform oder als fest verdrahtete Logik oder als Programm eines Logikbausteins einer Recheneinheit vorliegen.

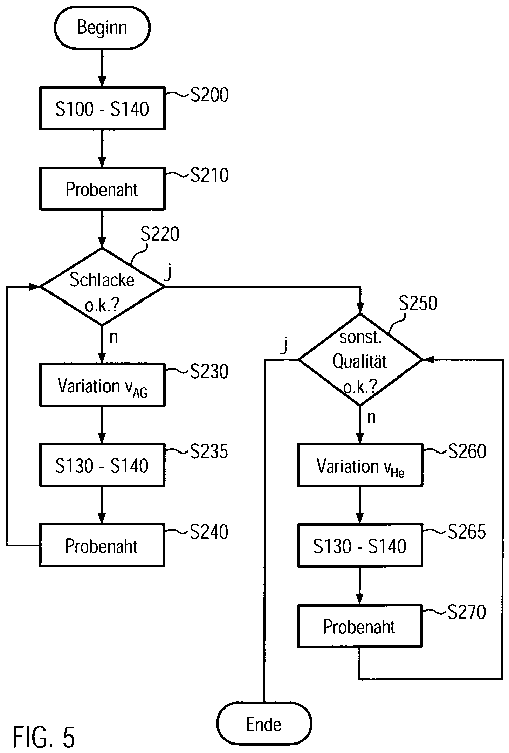

In Fig. 5 wird der in Fig. 4 dargestellte Ablauf um eine Prüfroutine erweitert.

Zunächst werden in Schritt S200 die vorstehend beschriebenen Schritte S100 bis S140 durchgeführt. D.h., der Siliziumgehalt w_Si der Drahtelektrode wird eingegeben, die Anteile v_AG, v_He und v_IG des Aktivgases, des Heliums und des weiteren Inertgases werden als Funktionen des Siliziumgehalts w_Si bzw. verbleibender Rest ermittelt, und die ermittelten Anteile werden ausgegeben, um eine Schutzgasmischung herzustellen.

Sodann wird in Schritt S210 eine Probenaht mit der ausgewählten Schutzgaszusammensetzung hergestellt und in Schritt S220 geprüft, ob die Schlackebildung auf der Naht annehmbar ist. Verläuft diese Prüfung positiv, leitet der Ablauf zu Schritt S250 über. Verläuft hingegen die Prüfung in Schritt S220 negativ, leitet der Ablauf zu Schritt S230 über.

In Schritt S230 wird der Aktivgasanteil v_AG variiert, und es werden in Schritt S235 die vorstehend beschriebenen Schritte S130 und S140 durchgeführt. D.h., der Anteil v_IG des weiteren Inertgases wird als verbleibender Rest des veränderten Aktivgasanteils v_AG und des unveränderten Helium-Anteils v_He ermittelt, und die neuen Anteile werden ausgegeben, um eine Schutzgasmischung herzustellen.

Anschließend wird in Schritt S240 eine erneute Probenaht hergestellt, und der Ablauf kehrt zu dem Prüfschritt S220 zurück.

Sobald der Prüfschritt S220 positiv ausgefallen ist, leitet, wie vorstehend erwähnt, der Ablauf zu Schritt S250 über.

In Schritt S250 wird geprüft, ob die Schweißnaht sonstigen Qualitätsanforderungen genügt. Diese Qualitätsprüfung kann auf eine reine Sichtprüfung etwa hinsichtlich Spritzern beschränkt sein. Sie kann aber auch Prüfungen der Festigkeit, des Einbrands und anderer Parameter umfassen. Verläuft diese Prüfung positiv, ist der Ablauf beendet, denn eine geeignete Schutzgaszusammensetzung wurde gefunden. Verläuft hingegen die Prüfung in Schritt S250 negativ, leitet der Ablauf zu Schritt S260 über.

In Schritt S260 wird der Helium-Anteil v_He variiert, und es werden in Schritt S265 die vorstehend beschriebenen Schritte S130 und S140 durchgeführt. D.h., der Anteil v_IG des weiteren Inertgases wird als verbleibender Rest des veränderten Helium-Anteils v_He und des unveränderten Aktivgasanteils v_AG ermittelt, und die neuen Anteile werden ausgegeben, um eine Schutzgasmischung herzustellen.

Anschließend wird in Schritt S270 eine erneute Probenaht hergestellt, und der Ablauf kehrt zu dem Prüfschritt S250 zurück.

Sobald der Prüfschritt S250 positiv ausgefallen ist, endet der Ablauf, wie vorstehend schon erwähnt.

Obschon in der Figur 5 nicht näher dargestellt, kann in Schritt S230 auch der Helium-Anteil v_He eine Anpassung an den variierten Aktivgasanteil v_AG erfahren, etwa anhand eines Diagramms wie in Fig. 3 oder einer Wertetabelle oder einer Rechenvorschrift, die auf dessen Grundlage erstellt oder definiert wurden.

Mit allen oben beschriebenen Schweißverfahren konnten hervorragende Schweißergebnisse, insbesondere silikatfreie Schweißnähte beim Schweißen von unlegierten Stählen und schwach legierten Stählen mit einer Dicke bis zu 5 mm erzielt werden.

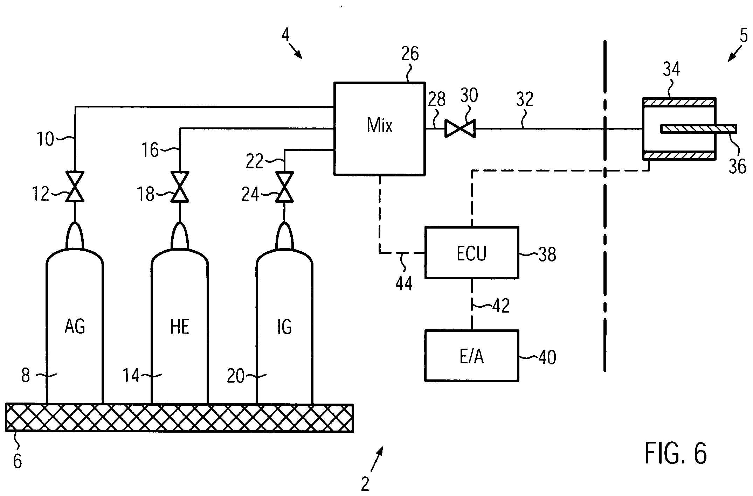

Fig. 6 zeigt schematisch eine Schweißvorrichtung 2 gemäß der Erfindung.

Die Schweißvorrichtung 2 weist grundsätzlich eine Schutzgas-Herstellungsvorrichtung 4 und einen Schweißautomaten 5 auf. In der Figur sind Bauteile, die der Schutzgas-Herstellungsvorrichtung 4 zugeordnet sind, links von einer strichpunktierten senkrechten Linie gezeigt, während Bauteile, die dem Schweißautomaten 5 zugeordnet sind, rechts von der strichpunktierten senkrechten Linie gezeigt sind.

Auf einer Bodenplatte 6 befindet sich ein Behälter 8 für Aktivgas (AG), von welchem eine Anschlussleitung 10 mit einem Absperrventil 12 wegführt, ein Behälter 14 für Helium (He), von welchem eine Anschlussleitung 16 mit einem Absperrventil 18 wegführt, und ein Behälter 20 für ein weiteres Inertgas (IG), von welchem eine Anschlussleitung 22 mit einem Absperrventil 24 wegführt. Die Anschlussleitungen 10, 16, 22 münden in eine Mischeinrichtung 26, die der Mischung eines Schutzgases mit vorgegebenen Anteilen an Aktivgas, Helium und Inertgas dient. Es ist anzumerken, dass hier mit dem Begriff "Inertgas" immer das weitere Inertgas gemeint ist, nicht das Helium. Als weiteres Inertgas kommt vor allem Argon in Betracht. Grundsätzlich könnten auch Neon, Xeon und Krypton verwendet werden, die jedoch aufgrund ihres hohen Preises weniger zum Einsatz kommen werden. Von der Mischeinrichtung 26 führt eine Schutzgasanschlussleitung 28 mit einem Hauptabsperrventil 30 weg.

Von dem Hauptabsperrventil führt eine Schutzgasleitung 32 zu der Schweißeinrichtung 5, von welcher in der Figur nur ein Schweißkopf 34 mit Drahtelektrode 36 dargestellt sind.

Zu der Schutzgas-Herstellungsvorrichtung 4 gehören ferner eine elektronische Steuereinheit (ECU) 38, die der Steuerung der Schutzgas-Herstellungsvorrichtung 4 dient, und eine Eingabe-/Ausgabevorrichtung (E/A) 40, die über eine Datenleitung 42 mit der ECU 38 verbunden ist. In die E/A 40 eingegebene Daten werden über die Datenleitung 42 der ECU 38 zugeführt, und auf der E/A 40 anzuzeigende oder von ihr zu verarbeitende Daten werden der E/A 40 über die Datenleitung 42 von der ECU 38 aus zugeführt.

Die ECU 38 ist ferner über eine Datenleitung 44 mit der Mischeinrichtung 26 verbunden. Über die Datenleitung 44 werden der Mischeinrichtung 26 Vorgabewerte für nicht näher dargestellte Stelleinrichtungen, die der Mischung der einzelnen Gase in der Mischeinrichtung 26 dienen, von der ECU 38 aus zugeführt. Des Weiteren werden Messwerte, die Istwerten der Stelleinrichtungen oder der tatsächlich erzielten Gasanteile entsprechen, von der Mischeinrichtung 26 über die Datenleitung 44 an die ECU 38 übertragen.

Die ECU 46 ist des Weiteren über eine Datenleitung 46 mit dem Schweißautomaten 5 verbunden. Die Datenleitung 46 dient dem Austausch von Signalen zwischen der ECU 46 und dem Schweißautomaten 5.

Ferner kann die ECU 46 über weitere Datenleitungen (nicht näher dargestellt) mit den Absperrventilen 12, 18, 24 und 30 verbunden sein, um deren Zustand zu überwachen und/oder zu steuern. Diese Datenleitungen können mit der Datenleitung 44 zusammengefasst sein.

Es versteht sich, dass die Vorratsbehälter 8, 14, 20 nur zum Zwecke des Beispiels in der typischen Form von Gasflaschen dargestellt sind. Es können Behälter beliebiger Form sein. Die Gase können auch in flüssigem oder festem Zustand bevorratet sein und bei Bedarf in den gasförmigen Zustand gebracht werden. Entsprechende Aufbereitungseinrichtungen sind nicht näher dargestellt, aber an sich bekannt.

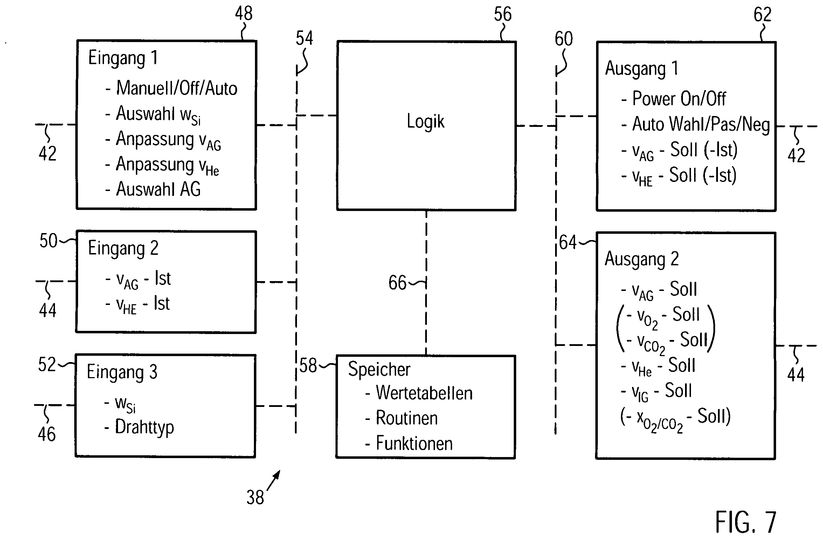

Fig. 7 zeigt anhand eines Blockschaltbildes den schematischen Aufbau der ECU 38.

Die ECU 38 weist eine erste Eingangseinrichtung 48 auf, die mit der Datenleitung 42 verbunden ist, um Ausgangssignale von der E/A 40 zu empfangen. Die hier eingehenden Signale umfassen:

- ein Signal "Manuell/Off/Auto", welches angibt, ob ein Siliziumgehalt einer Schweißelektrode manuell eingegeben wird, automatisch ermittelt werden soll oder nicht zu berücksichtigen ist;
- ein Signal "Auswahl w_Si", welches einem manuell ausgewählten Siliziumgehalt entspricht;
- ein Signal "Anpassung v_AG", welches angibt, ob, in welcher Richtung und um wie viel ein Aktivgasanteil von einem theoretischen Wert abweichen soll;
- ein Signal "Anpassung v_He", welches angibt, ob, in welcher Richtung und um wie viel ein Helium-Anteil von einem theoretischen Wert abweichen soll;
- ein Signal "Auswahl AG", welches angibt, welches von mehreren Aktivgasen (etwa $O_2$ und $CO_2$) verwendet werden soll, oder in welchem Mischungsverhältnis.

Die ECU 38 weist eine zweite Eingangseinrichtung 50 auf, die mit der Datenleitung 44 verbunden ist, um Ausgangssignale von der Mischeinrichtung 26 zu empfangen. Die hier eingehenden Signale umfassen:

- ein Signal "v_AG-Ist" , welches einen tatsächlich eingestellten Aktivgasanteil angibt;
- ein Signal "v_He-Ist", welches einen tatsächlich eingestellten Helium-Anteil angibt;
- ggf. Istwerte eines Öffnungsbetrags von Ventilen, eines Zustands von Absperrventilen und/oder eines Zustellweges von anderen Einrichtungen innerhalb der Mischeinrichtung 26 (nicht näher dargestellt);
- ggf. Überwachungsdaten hinsichtlich der Gasbehälter wie etwa Temperatur, Druck, etc. (nicht näher dargestellt).

Die ECU 38 weist eine dritte Eingangseinrichtung 52 auf, die mit der Datenleitung 46 verbunden ist, um Ausgangssignale von dem Schweißautomaten 5 zu empfangen. Die hier eingehenden Signale umfassen:

- ein Signal "w_Si", welches einen tatsächlich ermittelten Siliziumgehalt der Schweißelektrode angibt;
- ein Signal "Drahttyp", welches einen tatsächlich ermittelten Drahttyp der Schweißelektrode angibt;
- ggf. Betriebsdaten wie An/Aus, Vorschub, Elektrodenwechsel, etc. (nicht näher dargestellt).

Über einen Eingangsbus 54 sind die Eingangseinrichtungen 48, 50, 52 mit einer Verarbeitungseinheit (Logik) 56 verbunden. Diese ist über einen internen Bus 66 mit einer Speichereinrichtung 58 verbunden, die von der Logik 56 benötigte Daten hält wie etwa Wertetabellen, Routinen und Funktionen. Die Speichereinrichtung 58 kann auch ein Betriebssystem für den Betrieb der ECU 38 halten, dieses kann aber auch in einem weiteren Speicherbaustein bereitgehalten werden. In der Verarbeitungseinheit 56, die etwa eine CPU an sich bekannter Art sein kann, werden die eingegebenen Daten und Speicherdaten verarbeitet, um Ausgangsdaten, insbesondere Steuerdaten für die Mischeinrichtung 26 sowie Anzeigedaten für die E/A 40 zu erzeugen.

Über einen Ausgangsbus 60 ist die Verarbeitungseinheit 56 mit einer ersten Ausgangseinrichtung 62 verbunden, die an den Datenbus 42 angeschlossen ist, um Signale an die E/A 40 zu übertragen. Die hier ausgegebenen Signale umfassen:

- ein Signal "Power On/Off', welches einen Aktivierungszustand der Schutzgas-Herstellungsvorrichtung angibt;
- ein Signal "Auto Wahl/Pos/Neg", welches angibt, ob eine automatische Erkennung des Siliziumgehalts des Schweißdrahts ausgewählt ist, falls ja, ob eine automatische Erkennung möglich oder nicht möglich ist;

- ein Signal "v_AG-Soll", welches einen ermittelten Vorgabewert für den Aktivgasanteil angibt;
- ein Signal "v_He-Ist", welches einen ermittelten Vorgabewert für den Helium-Anteil angibt;
- ggf. das Signal "v_AG-Ist" und das Signal "v_He-Ist".

Über den Ausgangsbus 60 ist die Verarbeitungseinheit 56 ferner mit einer zweiten Ausgangseinrichtung 64 verbunden, die an den Datenbus 44 angeschlossen ist, um Signale an die Mischeinrichtung 26 zu übertragen. Die hier ausgegebenen Signale umfassen:

- das Signal "v-AG-Soll";
- das Signal "v_He-Soll";
- ein Signal "v_IG-Soll", welches einen ermittelten Vorgabewert für den Anteil des weiteren Inertgases angibt;
- statt des Signals "v_AG-Soll" ggf. ein Signal "v_ $O_2$-Soll", welches einen ermittelten Vorgabewert für den Sauerstoffanteil im Schutzgas angibt, und ein Signal "v_ $CO_2$-Soll", welches einen ermittelten Vorgabewert für den Kohlendioxidanteil im Schutzgas angibt;
- ggf. ein Signal "x_ $O_2$/ $CO_2$-Soll", welches einen ermittelten Vorgabewert für das Verhältnis Sauerstoff zu Kohlendioxid im Aktivgas angibt.

Je nach Aufbau der Mischeinrichtung kann es sein, dass einzelne Signale nicht benötigt werden, wenn sich aufgrund baulicher Gegebenheiten bestimmte Gasanteile von selbst ergeben.

Die ECU 38 kann noch weitere Bausteine enthalten, die der Funktion derselben dienen. So können etwa weitere Eingangs- und Ausgangseinrichtungen vorhanden sein zum Austausch von Daten mit der Außenwelt, Laufwerke für Speichermedien, eine eigene Anzeigeeinrichtung etc. So können etwa die Wertetabellen, Routinen und Funktionen der Speichereinrichtung 58 aktualisiert werden.

Insbesondere bestimmt die Logik 56 ausgewählte Werte für Aktivgasanteil, Helium-Anteil und Inertgasanteil im Schutzgas als Funktion des Siliziumgehalts in der Elektrode anhand von Wertetabellen, Routinen und Funktionen in der Speichereinrichtung 56, die auf der Grundlage der vorstehend diskutierten Überlegungen hinsichtlich Auswahlbereichen und Optimalwerten für den Aktivgasanteil, den Helium-Anteil und den Inertgasanteil im Schutzgas hergestellt wurden.

Ferner erhöht oder erniedrigt die Logik 56 die ausgewählten Werte als Funktion der Signale "Anpassung v_AG" und/oder "Anpassung v_He".

Ferner deaktiviert die Logik 56 die Mischeinrichtung 26 oder führt ihr vorausgewählte Standardwerte zu und setzt das Signal "Power On/Off' auf Off, wenn das Signal "Manuell/Off/Auto" Off ist, und setzt das Signal "Power On/Off' auf On, wenn das Signal "Manuell/Off/Auto" Manuell oder Auto angibt.

Ferner zieht die Logik 56 das Signal "Auswahl w_Si" für die Berechnungen heran, wenn das Signal "Manuell/Off/Auto" eine manuelle Eingabe angibt.

Ferner setzt die Logik 56 das Signal "Auto Wahl/Pos/Neg" auf Wahl, wenn das Signal "Manuell/Off/Auto" eine automatische Erkennung angibt.

Ferner zieht die Logik 56 das Signal "w_Si" für die Berechnungen heran oder ermittelt den Siliziumanteil anhand des Signals "Drahttyp", wenn das Signal "Manuell/Off/Auto" eine automatische Erkennung angibt und das Signal "w_Si" oder das Signal "Drahttyp" angeben, dass eine automatische Erkennung möglich ist, und setzt in diesem Fall das Signal "Auto Wahl/Pos/Neg" auf Pos.

Ferner setzt die Logik 56 das Signal "Auto Wahl/Pos/Neg" auf Neg, wenn das Signal "Manuell/Off/Auto" eine automatische Erkennung angibt und das Signal "w_Si" und das Signal "Drahttyp" angeben, dass eine automatische Erkennung nicht möglich ist.

Die ermittelten Werte für die Gasanteile im Schutzgas setzt die Logik 56 ferner in Signale um, die eine Ansteuerung der Mischeinrichtung ermöglichen.

Ferner kann die Logik 56 die von der Mischeinrichtung 26 zurückgegebenen Istwertsignale verwenden, um eine Regelung durchzuführen.

Ferner können Zustandssignale von dem Schweißautomaten 5 oder Überwachungssignale verwendet werden, um das Hauptabsperrventil 30 und/oder die einzelnen Absperrventile 12, 18, 24 zu schließen oder zu öffnen und somit zur Anlagensicherheit beizutragen und den Gasverbrauch zu minimieren.

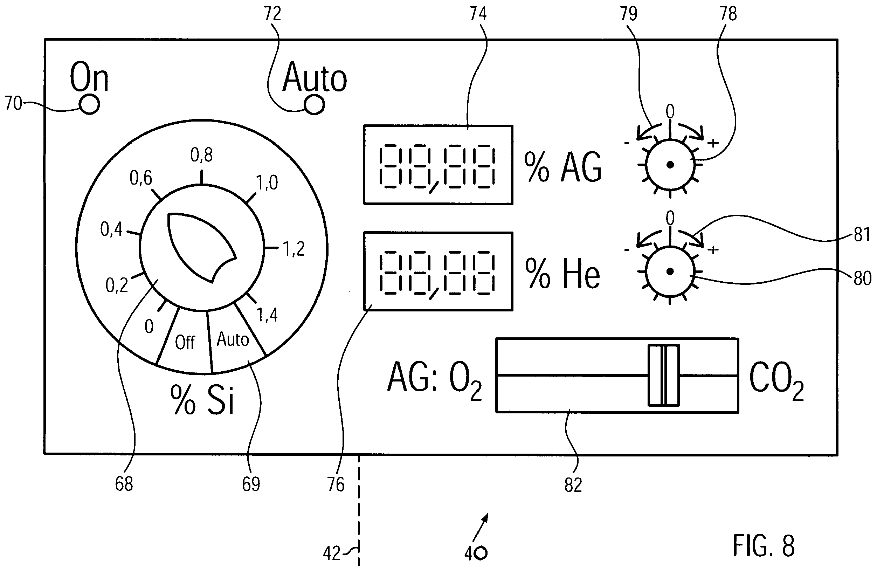

Fig. 8 zeigt eine Schalttafel der E/A 40 in der Draufsicht mit zugehörigen Bedien- und Anzeigeelementen.

Die E/A 40 empfängt Eingangssignale von der ECU 38 und sendet Ausgangssignale an die ECU 38 über die Datenleitung 42.

Ein Drehknopf 68 steht mit einem Schaltnetz und einem Potentiometer oder dergleichen in Verbindung, welches wenigstens zwei feste Schaltpositionen und einen stufenlosen oder abgestuften Schaltbereich aufweist und das Signal "Manuell/Off/Auto" und das Signal "Auswahl w_Si" erzeugt. In einer ersten festen Schaltposition nimmt das Signal "Manuell/Off/Auto" den Wert Off an. In einer zweiten festen Schaltposition nimmt das Signal "Manuell/Off/Auto" den Wert Auto an. In dem Schaltbereich nimmt das Signal "Manuell/Off/Auto" den Wert Manuell an und entspricht das Signal "Auswahl w_Si" der Position innerhalb des Schaltbereichs. Schaltpositionen und der Schaltbereich sind auf einer Skala 69 angegeben.

Eine Leuchtdiode 70 zeigt den Funktionsstatus der Einrichtung an. Sie leuchtet vorzugsweise grün, wenn das Signal "Power On/Off" On ist. Dieses wird von der ECU 38 ausgegeben, wenn das Signal "Manuell/Off/Auto" nicht Off ist.

Eine Leuchtdiode 72 zeigt den Status einer automatischen Elektrodenerkennung an und ist in der Lage, in drei Farben zu leuchten. Sie leuchtet vorzugsweise gelb, wenn das Signal "Auto Wahl/Pos/Neg" Wahl ist. Sie leuchtet vorzugsweise grün, wenn das Signal "Auto Wahl/Pos/Neg" Pos ist. Sie leuchtet vorzugsweise rot, wenn das Signal "Auto Wahl/Pos/Neg" Neg ist.

Es ist anzumerken, dass das Signal "Auto Wahl/Pos/Neg" auf ein Signal "Auto Pos/Neg" reduziert werden kann. In dem Fall legt die ECU 38 das Signal "Auto Pos/Neg" dann, wenn das Signal "Manuell/Off/Auto" Auto ist, zunächst auf Neg fest und legt es nur dann auf Pos fest, wenn das Signal "w_Si" oder das Signal "Drahttyp" anzeigen, dass eine automatische Erkennung des Siliziumgehalts möglich ist. In diesem Fall muss die Leuchtdiode 72 nur zwei Farben aufweisen.

Eine Digitalanzeige 74 dient der Anzeige des Aktivgasanteils, während eine Digitalanzeige 76 der Anzeige des Helium-Anteils dient. Hier ist die Anzeige der jeweiligen Sollwerte vorgesehen, es kann jedoch alternativ oder zusätzlich auf gesonderten Digitalanzeigen (nicht näher dargestellt) auch der Istwert angegeben werden. Es kann auch ein Auswahlschalter (nicht näher dargestellt) zur Auswahl von Istwert oder Sollwert zur Anzeige vorgesehen sein. Somit setzen die Digitalanzeigen 74 und 76 die Signale "v_AG-SoN" und "v_He-Soll" und/oder die Signale "v_AG-Ist" und "v_He-Ist" um. Anstelle der Digitalanzeigen können auch Zeigeranzeigen vorgesehen sein.

Zwei gerändelte Drehknöpfe 78 und 80 dienen der Feineinstellung des Aktivgas- und des Helium-Anteils. Die zugehörigen stufenlosen Schaltnetze, Potentiometer oder dergleichen erzeugen somit die Signale "Anpassung v_AG" und "Anpassung v_He". Die Drehknöpfe 78, 80 weisen auch Markierungen auf, die eine genaue Positionierung anhand von Skalen 79, 81 erlauben. Die Skalen 79, 81 tragen keine Absolutwerte, sondern lediglich eine Nullstellung sowie Plus- und Minus-Bereiche. Falls die Drehknöpfe 78, 80 eine Drehung um mehr als 180° erlauben, können Reset-Einrichtungen (nicht näher dargestellt) vorgesehen sein, die das zugehörige Instrument wieder in die Nullstellung bringen.

Ein Schieberegler 82 ermöglicht es, den Anteil zweier Aktivgase (hier: $O_2$ und $CO_2$) zueinander vorzugeben. Der Schieberegler erzeugt das Signal "Auswahl AG". Anstelle des Schiebereglers 82 kann auch ein Umschalter (nicht näher dargestellt) vorgesehen sein, der eine bloße Umschaltung zwischen zwei Aktivgasen ermöglicht.

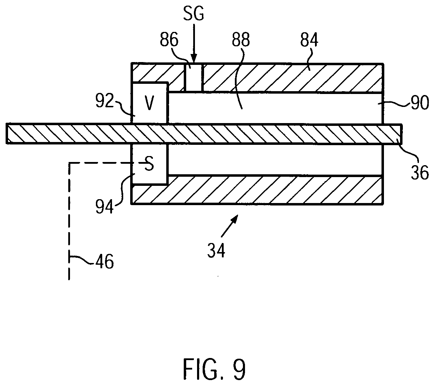

Fig. 9 zeigt den Schweißkopf 34 des Automaten 5 in weiteren Einzelheiten.

Der Schweißkopf 34 weist ein Gehäuse 84 mit einem Schutzgasanschluss (SG) 86 auf. Der Schutzgasanschluss 86 mündet in einen Kanal 88, der zu einer Austrittsöffnung des Gehäuses 84 führt.

Innerhalb des Gehäuses ist die Elektrode 36 geführt. Die Elektrode 36 wird durch eine Vorschubeinrichtung 92, die in dem Gehäuse 84 eingebaut ist, nachgeführt.

Ferner ist eine Sensoreinrichtung 94 vorgesehen, die den Typ der verwendeten Elektrode 36 oder deren Siliziumgehalt w_Si direkt ermittelt.

Schweißelektroden für Schweißautomaten werden heute in Form von Drähten auf großen Rollen verwendet. Am freien Ende des Schweißdrahts kann beispielsweise eine Kodierung angebracht sein, die es der Sensoreinrichtung 94 ermöglicht, den Typ oder den Si-Gehalt des Drahtes zu erkennen. Eine solche Kodierung kann auch in regelmäßigen Abständen oder kontinuierlich an dem Draht angebracht sein. Als Kodierungen kommen Durchmesser, Querschnittsform, Längsrillen, Prägungen oder Ätzungen in Frage oder einfache Etiketten aus Papier oder Kunststoff, die in dem Sensor entfernt werden oder bei Einsatz des Drahtes ohnehin verbrennen.

Die in der Patentanmeldung beschriebenen Prozentangaben (%) für das Schutzgas sind Angaben in Volumenprozent (Vol.-%).

Bezugszeichen:

A Typenbezeichnung einer Normalelektrode

| | |
|---|---|
| B | Typenbezeichnung einer Elektrode mit vermindertem Si-Gehalt |
| C | Typenbezeichnung einer Elektrode mit niedrigem Si-Gehalt A, B, C werden auch für experimentelle ermittelte Wertebereiche verwendet, die den jeweiligen Elektrodentypen zugeordnet sind. |
| M | Mittellinie |
| Max_AG | Interpolationslinie der Obergrenze für Aktivgas |
| Opt_AG | mittlere Interpolationslinie der Bereiche für Aktivgas |
| Min_AG | Interpolationslinie der Untergrenze für Aktivgas |
| Max_He | Interpolationslinie der Obergrenze für Helium |
| Opt_He | mittlere Interpolationslinie der Bereiche für Helium |
| Min_He | Interpolationslinie der Untergrenze für Helium |
| P_A,B,C | Optimalpunkte für Bereiche A, B, C hinsichtlich Aktivgas Stützpunkte für Interpolationslinie Opt_AG |
| P_1,2,3 | Stützpunkte für Interpolationslinie Max_AG |
| P_4,5,6 | Stützpunkte für Interpolationslinie Min_AG |
| P_7,8 | Eckpunkte eines Auswahlbereichs für Aktivgas |
| Q_A,B,C | Optimalpunkte für Bereiche A, B, C hinsichtlich Helium Stützpunkte für Interpolationslinie Opt_He |
| Q_1,2,3 | Stützpunkte für Interpolationslinie Max_He |
| Q_4,5,6 | Stützpunkte für Interpolationslinie Min_He |
| Q_7,8 | Eckpunkte eines Auswahlbereichs für Helium |
| R_A,B,C | Optimalpunkte für Bereiche A, B, C hinsichtlich Aktivgas und Helium Stützpunkte für Mittellinie M |
| v_AG | Anteil des Aktivgases am Schutzgas in % des Gesamtvolumens |
| $v_CO_2$ | Anteil von Kohlendioxid am Schutzgas in % des Gesamtvolumens |
| v_He | Anteil des Heliums am Schutzgas in % des Gesamtvolumens |
| $v_O_2$ | Anteil von Sauerstoff am Schutzgas in % des Gesamtvolumens |
| w_Si | Siliziumgehalt der Elektrode in % |
| 2 | Schweißvorrichtung |
| 4 | Schutzgas-Herstellungsvorrichtung |
| 5 | Schweißautomat |
| 6 | Bodenplatte |
| 8 | Lagerbehälter für Aktivgas |
| 10 | Zuführleitung für Aktivgas |
| 12 | Absperrventil für Aktivgas |
| 14 | Lagerbehälter für Helium |
| 16 | Zuführleitung für Helium |
| 18 | Absperrventil für Helium |
| 20 | Lagerbehälter für Inertgas |
| 22 | Zuführleitung für Inertgas |
| 24 | Absperrventil für Inertgas |
| 26 | Mischvorrichtung |
| 28 | Schutzgasableitung |
| 30 | Hauptabsperrventil |
| 32 | Verbindungsleitung |
| 34 | Schweißkopf |
| 36 | Schweißdraht |
| 38 | Steuervorrichtung |
| 40 | Eingabe-Ausgabevorrichtung |
| 42,44,46 | Signalleitungen |
| 48 | erste Empfangseinrichtung |
| 50 | zweite Empfangseinrichtung |
| 52 | dritte Empfangseinrichtung |
| 54 | Eingangsbus |
| 56 | Logikbaustein |
| 58 | Speichereinrichtung |
| 60 | Ausgangsbus |
| 62 | erste Ausgangseinrichtung |
| 64 | zweite Ausgangseinrichtung |
| 66 | interner Bus |
| 68 | Si-Auswahlschalter |
| 69 | Si-Auswahlskala |

| | |
|---|---|
| 70 | Power-On-Anzeige |
| 72 | Auto-Erkennungs-Anzeige (3-farbig) |
| 74 | AG-Anzeige |
| 76 | He-Anzeige |
| 78 | AG-Anpassungsschalter |
| 79 | AG-Anpassungsskala |
| 80 | He-Anpassungsschalter |
| 79 | He-Anpassungsskala |
| 82 | AG-Auswahl- und Mischungsschieber |
| 84 | Gehäuse |
| 86 | Schutzgas-Anschluss |
| 88 | Schutzgaskanal |
| 90 | Auslass |
| 92 | Vorschubeinrichtung |
| 92 | Sensoreinrichtung |

**Patentansprüche**

1. Verfahren zum Lichtbogenschweißen von unlegierten oder schwach legierten Stählen, wobei die gesamten Legierungskomponenten maximal 6 Gew.% des schwach legierten Stahls betragen, mit abschmelzender Elektrode unter Schutzgas, bei welchem das Schutzgas ein Gemisch ist, das wenigstens Helium und ein Aktivgas sowie ein weiteres Inertgas aufweist, wobei
in Abhängigkeit des Si-Gehaltes eines als Elektrode verwendeten Schweißdrahtes (36) eine der folgenden Zusammensetzungen des Schutzgases verwendet wird,
**dadurch gekennzeichnet, dass**
wenn der Schweißdraht (36) eine Normalelektrode (A) mit einem Siliziumgehalt von 0,7 bis 1,2% ist, der Anteil des Aktivgases am Gesamtvolumen des Schutzgases mehr als 0,5 % bis 1,5 % beträgt und der Anteil des Heliums am Gesamtvolumen des Schutzgases mehr als 30 % beträgt, oder
wenn der Schweißdraht (36) einen niedrigen Si-Gehalt von 0,05 % bis 0,1 % aufweist, der Anteil des Aktivgases am Gesamtvolumen des Schutzgases 3 % bis 10 % beträgt.

2. Verfahren gemäß Anspruch 1,
**dadurch gekennzeichnet, dass**
bei Verwendung einer Normalelektrode (A) der Anteil des Heliums am Gesamtvolumen des Schutzgases wenigstens 40 %, insbesondere mehr als 45 %, und höchstens 60%, vorzugsweise 50 % beträgt.

3. Verfahren gemäß Anspruch 1,
**dadurch gekennzeichnet, dass**
bei Verwendung eines Schweißdrahtes (36) mit einem niedrigen Si-Gehalt von 0,05 % bis 0,1 % der Anteil des Heliums am Gesamtvolumen des Schutzgases 10 % bis 70 %, insbesondere 20 % bis 50 %, vorzugsweise 30 % beträgt.

4. Verfahren gemäß einem der vorstehenden Ansprüche,
**dadurch gekennzeichnet, dass**
Bleche von höchstens 5 mm Stärke verschweißt werden.

5. Verfahren gemäß einem der vorstehenden Ansprüche,
**dadurch gekennzeichnet, dass**
das Aktivgas Sauerstoff oder Kohlendioxid oder ein Gemisch aus diesen aufweist.

6. Verfahren gemäß einem der vorstehenden Ansprüche,
**dadurch gekennzeichnet, dass**
das weitere Inertgas Argon aufweist.

7. Verfahren gemäß einem der vorstehenden Ansprüche,
weiter **gekennzeichnet durch**
einen Schlackenprüfschritt, bestehend aus:

- Einstellen des Aktivgasanteils auf einen gemäß der jeweils angegebenen Vorschrift ausgewählten Wert; und
- iteratives Durchführen einer Testschweißung mit dem zu schweißenden Werkstoff, Prüfen der Schweißnaht auf Schlackeablagerungen sowie gegebenenfalls Variieren des Aktivgasanteils innerhalb der jeweils angegebenen Grenzen, bis die Schlackeablagerung annehmbar ist.

**8.** Verfahren gemäß einem der vorstehenden Ansprüche,
weiter **gekennzeichnet durch**
einen Qualitätsprüfschritt, bestehend aus:

- Einstellen des Heliumanteils auf einen gemäß der jeweils angegebenen Vorschrift ausgewählten Wert; und
- iteratives Prüfen sonstiger Qualitätsmerkmale der Schweißnaht und gegebenenfalls Variieren des Heliumanteils innerhalb der angegebenen Grenzen, bis die gewünschte oder maximal erzielbare Qualität erreicht ist.

**9.** Verfahren gemäß einem der vorstehenden Ansprüche,
weiter **gekennzeichnet durch** die Schritte:

- manuelles Eingeben des Siliziumgehalts des verwendeten Schweißdrahts (36); und
- automatisches Einstellen des Aktivgasgehalts und/oder des Heliumanteils des Aktivgases in Abhängigkeit von dem Siliziumgehalt des Schweißdrahts (36).

**10.** Schutzgas-Herstellungsvorrichtung (4) aufweisend: jeweilige Vorratsbehälter (8, 14, 20) wenigstens für ein Aktivgas, Helium und ein weiteres Inertgas in gasförmigem, flüssigem oder festem Aggregatzustand; eine Dosiereinrichtung zum Dosieren der aus den Vorratsbehältern zugeführten Gase; und eine Steuereinrichtung (38) zum Ansteuern der Dosiereinrichtung, um die Volumenanteile der jeweiligen Gase entsprechend vorgegebenen Werten selbsttätig zu regulieren,
**dadurch gekennzeichnet, dass** die Steuereinrichtung (38) eine Empfangseinrichtung (48, 50, 52), die angepasst ist, ein einem Siliziumanteil eines Schweißdrahts (36) entsprechendes Signal zu empfangen, und eine Verarbeitungseinrichtung, die angepasst ist, in Abhängigkeit von dem empfangenen Signal Vorgabewerte für die Volumenanteile der jeweiligen Gase zu ermitteln, aufweist, wobei die Verarbeitungseinrichtung angepasst ist, den Vorgabewert für den Aktivgasanteil und/oder den Heliumanteil zu ermitteln, wobei wenn der Schweißdraht (36) eine Normalelektrode (A) mit einem Siliziumgehalt von 0,7 bis 1,2% ist, der Anteil des Aktivgases am Gesamtvolumen des Schutzgases mehr als 0,5 % bis 1,5 % beträgt und der Anteil des Heliums am Gesamtvolumen des Schutzgases mehr als 30 % beträgt, oder wenn der Schweißdraht (36) einen niedrigen Si-Gehalt von 0,05 % bis 0,1 % aufweist, der Anteil des Aktivgases am Gesamtvolumen des Schutzgases 3 % bis 10 % beträgt.

**11.** Schweißvorrichtung (2), vorzugsweise Schweißanlage oder Schweißautomat, **dadurch gekennzeichnet, dass** eine Schutzgas-Herstellungseinrichtung (4) gemäß Anspruch 10 vorgesehen ist.

**12.** Schweißvorrichtung (2) gemäß Anspruch 11,
weiter **gekennzeichnet durch**
eine Erkennungseinrichtung zum Erkennen des Typs oder des Siliziumgehalts des Schweißdrahts (36); und
eine Ausgabeeinrichtung zum Ausgeben eines das Erkennungsmerkmal wiedergebenden Signals.

## Claims

**1.** Method for arc welding unalloyed or low-alloyed steels, wherein the entire alloying components amount to a maximum of 6% by weight of the low-alloyed steel, with a melting electrode under protective gas, in which the protective gas is a mixture comprising at least helium and an active gas as well as a further inert gas, wherein
in dependence on the Si content of a welding wire (36) used as the electrode, one of the following compositions of the protective gas is used, **characterized in that**
if the welding wire (36) is a normal electrode (A) with a silicon content of 0.7 to 1.2%, the active gas fraction in the total volume of the protective gas is more than 0.5% to 1.5% and the helium fraction in the total volume of the protective gas is more than 30%, or if the welding wire (36) has a low Si content of 0.05% to 0.1%, the active gas fraction in the total volume of the protective gas is 3% to 10%.

**2.** Method according to Claim 1,
**characterized in that**

when a normal electrode (A) is used, the helium fraction in the total volume of the protective gas is at least 40%, in particular more than 45%, and at most 60%, preferably 50%.

**3.** Method according to Claim 1,
**characterized in that**
when a welding wire (36) with a low Si content of 0.05% to 0.1% is used, the helium fraction in the total volume of the protective gas is 10% to 70%, in particular 20% to 50%, preferably 30%.

**4.** Method according to one of the preceding claims, **characterized in that**
metal sheets of a thickness of at most 5 mm are welded.

**5.** Method according to one of the preceding claims, **characterized in that**
the active gas comprises oxygen or carbon dioxide or a mixture of these.

**6.** Method according to one of the preceding claims, **characterized in that**
the further inert gas comprises argon.

**7.** Method according to one of the preceding claims, further **characterized by**
a slag testing step, comprising

- setting the active gas fraction to a value selected according to the respectively indicated specification; and
- iteratively carrying out a test welding with the material to be welded, testing the weld seam for slag deposits and, if required, varying the active gas fraction within the respectively indicated limits until the slag deposit is acceptable.

**8.** Method according to one of the preceding claims, further **characterized by**
a quality testing step, comprising:

- setting the helium fraction to a value selected according to the respectively indicated specification; and
- iteratively testing other quality features of the weld seam and, if required, varying the helium fraction within the indicated limits until the desired or maximum achievable quality is reached.

**9.** Method according to one of the preceding claims, further **characterized by** the steps of:

- manually entering the silicon content of the welding wire (36) used; and
- automatically setting the active gas content and/or the helium fraction of the active gas in dependence on the silicon content of the welding wire (36).

**10.** Protective gas production device (4), comprising:

respective storage tanks (8, 14, 20) at least for an active gas, helium and a further inert gas in a gaseous, liquid or solid state of aggregation; a metering device for metering the gases supplied from the storage tanks; and a control device (38) for activating the metering device in order to automatically regulate the volume fractions of the respective gases according to specified values,
**characterized in that**
the control device (38) comprises a receiving device (48, 50, 52), which is adapted to receive a signal corresponding to a silicon fraction of a welding wire (36), and a processing device, which is adapted to determine target values for the volume fractions of the respective gases in dependence on the received signal, wherein the processing device is adapted to determine the target value for the active gas fraction and/or the helium fraction, wherein, if the welding wire (36) is a normal electrode (A) with a silicon content of 0.7 to 1.2%, the active gas fraction in the total volume of the protective gas is more than 0.5% to 1.5% and the helium fraction in the total volume of the protective gas is more than 30%, or, if the welding wire (36) has a low Si content of 0.05% to 0.1%, the active gas fraction in the total volume of the protective gas is 3% to 10%.

**11.** Welding device (2), preferably a welding installation or an automatic welding unit, **characterized in that**
a protective gas production device (4) according to Claim 10 is provided.

**12.** Welding device (2) according to Claim 11,

further **characterized by**
an identifying device for identifying the type or the silicon content of the welding wire (36); and
an output device for outputting a signal reproducing the identifying feature.

## Revendications

1. Procédé destiné au soudage à l'arc d'aciers non alliés ou faiblement alliés, dans lequel la totalité des composants de l'alliage s'élève à au plus 6 % en poids de l'acier faiblement allié, avec une électrode consommable en recourant à un gaz de protection, pour lequel le gaz de protection est un mélange qui présente au moins de l'hélium et un gaz actif, ainsi qu'un autre gaz inerte, dans lequel l'une des compositions suivantes du gaz de protection est employée, en fonction de la teneur en Si d'un fil de soudage (36) employé comme électrode,
**caractérisé en ce que**

   - quand le fil de soudage (36) est une électrode normale (A) avec une teneur en silicium comprise entre 0,7 % et 1,2 %, la proportion du gaz actif, par rapport au volume total du gaz de protection, s'élève à une valeur comprise entre plus de 0,5 % et 1,5 % et la proportion d'hélium, par rapport au volume total du gaz de protection, s'élève à plus de 30 % ; ou
   - quand le fil de soudage (36) présente une teneur réduite en Si dont la valeur est comprise entre 0,05 % et 0,1 %, la proportion du gaz actif, par rapport au volume total du gaz de protection, s'élève à une valeur comprise entre 3 % et 10 %.

2. Procédé selon la revendication 1,
**caractérisé en ce que**
lors de l'emploi d'une électrode normale (A), la proportion d'hélium, par rapport au volume total du gaz de protection, s'élève à au moins 40 %, en particulier à plus de 45 %, et tout au plus à 60 %, mais de préférence à 50 %.

3. Procédé selon la revendication 1,
**caractérisé en ce que**
lors de l'emploi d'un fil de soudage (36) avec une teneur réduite en Si dont la valeur est comprise entre 0,05 % et 0,1 %, la proportion d'hélium, par rapport au volume total du gaz de protection, s'élève à une valeur comprise entre 10 % et 70 %, en particulier entre 20 % et 50 %, et s'élève de préférence à 30 %.

4. Procédé selon l'une des revendications précédentes, **caractérisé en ce que**
des tôles, dont l'épaisseur ne dépasse pas 5 mm, sont soudées.

5. Procédé selon l'une des revendications précédentes, **caractérisé en ce que**
le gaz actif présente de l'oxygène ou du dioxyde de carbone ou un mélange constitué de ces gaz.

6. Procédé selon l'une des revendications précédentes, **caractérisé en ce que**
l'autre gaz inerte présente de l'argon.

7. Procédé selon l'une des revendications précédentes, **caractérisé en outre par** une phase de contrôle des scories, étant constituée de :

   - un ajustement de la proportion du gaz actif à une valeur sélectionnée conformément à la prescription respectivement indiquée ; et
   - la réalisation itérative d'une soudure d'essai avec la matière devant être soudée, la vérification des dépôts de scories éventuels qui sont présents sur le joint de soudure, ainsi que, le cas échéant, la variation de la proportion du gaz actif à l'intérieur des seuils respectivement indiqués, jusqu'à ce que le dépôt de scories soit acceptable.

8. Procédé selon l'une des revendications précédentes, **caractérisé en outre par** une phase de contrôle de la qualité, étant constituée de :

   - un ajustement de la proportion d'hélium à une valeur sélectionnée conformément à la prescription respectivement indiquée ; et
   - la vérification itérative de diverses autres caractéristiques de qualité du joint de soudure et, le cas échéant, la variation de la proportion d'hélium à l'intérieur des seuils indiqués, jusqu'à ce que la qualité souhaitée ou que la qualité pouvant être au plus obtenue soit atteinte.

9. Procédé selon l'une des revendications précédentes, **caractérisé en outre par** les phases suivantes :

- la saisie manuelle de la teneur en silicium du fil de soudage (36) employé ; et
- un ajustement automatique de la teneur en gaz actif et/ou de la proportion d'hélium dans le gaz actif, en fonction de la teneur en silicium du fil de soudage (36).

10. Dispositif de fabrication d'un gaz de protection (4) présentant :

- des cuves de stockage (8, 14, 20) respectives tout au moins pour un gaz actif, l'hélium et un autre gaz inerte dans un état physique se présentant sous une forme gazeuse, liquide ou solide ;
- un mécanisme de dosage destiné au dosage des gaz acheminés en dehors des cuves de stockage ; et
- un mécanisme de commande (38) destiné à la commande du mécanisme de dosage, afin de réguler de manière autonome les fractions en volume des gaz respectifs, en fonction des valeurs prédéfinies,

**caractérisé en ce que**
le mécanisme de commande (38) présente un mécanisme de réception (48, 50, 52), lequel est adapté en vue de recevoir un signal correspondant à une proportion en silicium d'un fil de soudage (36), et un mécanisme de traitement, lequel est adapté en vue de déterminer des valeurs par défaut pour les fractions de volume des gaz respectifs, en fonction du signal reçu,
dans lequel
le mécanisme de traitement est adapté en vue de déterminer la valeur par défaut pour la proportion de gaz actif et/ou pour la proportion d'hélium,
dans lequel

- quand le fil de soudage (36) est une électrode normale (A) avec une teneur en silicium comprise entre 0,7 % et 1,2 %, la proportion du gaz actif, par rapport au volume total du gaz de protection, s'élève à une valeur comprise entre plus de 0,5 % et 1,5 % et la proportion d'hélium, par rapport au volume total du gaz de protection, s'élève à plus de 30 % ; ou
- quand le fil de soudage (36) présente une teneur réduite en Si dont la valeur est comprise entre 0,05 % et 0,1 %, la proportion du gaz actif, par rapport au volume total du gaz de protection, s'élève à une valeur comprise entre 3 % et 10 %.

11. Dispositif de soudage (2), de préférence un poste de soudage ou une machine automatique à souder, **caractérisé en ce que**
la mise en place d'un dispositif de fabrication d'un gaz de protection (4) selon la revendication 10 est prévue.

12. Dispositif de soudage (2) selon la revendication 11,
**caractérisé en outre par**

- un mécanisme de reconnaissance destiné à la reconnaissance du type ou de la teneur en silicium du fil de soudage (36) ; et
- un mécanisme de sortie destiné à la transmission d'un signal reproduisant la caractéristique de reconnaissance.

$v_{AG}$[%]
10
5
1
0
0,1
0,5
1,0
1,5
$w_{Si}$[%]
C
$P_C$
B
$P_B$
A
$P_A$
$Opt_{AG}$

FIG. 1A

v_AG[%]
10
5
1
0
0,1
0,5
1,0
1,5
w_Si[%]
Max_AG
Opt_AG
Min_AG
P_1
P_2
P_3
P_4
P_5
P_6
P_A
P_B
P_C

FIG. 1B

v_AG[%]
w_Si[%]
10
5
1
0
0,1
0,5
1,0
1,5
P1
P2
P3
P4
P5
P6
P7
P8
PA
PB
PC
Max_AG
Max_AG'
Max_AG''
Opt_AG
Min_AG
Min_AG'
Min_AG''

FIG. 1C

$v_{He}$[%]
100
50
10
0
0,1
0,5
1,0
1,5
$w_{Si}$[%]
$Opt_{He}$
A
B
C
$Q_A$
$Q_B$
$Q_C$


FIG. 2A

$v_{He}$[%]
100
50
10
0
0,1
0,5
1,0
1,5
$w_{Si}$[%]
$Q_1$
$Q_2$
$Q_3$
$Q_4$
$Q_5$
$Q_6$
$Q_7$
$Q_8$
$Max_{He}$
$Max_{He}'$
$Opt_{He}$
$Min_{He}'$
$Min_{He}$

FIG. 2B

FIG. 3

$v_{He}$[%]
100
50
10
0
1
5
10
15
$v_{AG}$[%]
A
B
C
$Q_A$
$Q_B$
$Q_C$
$w_{Si}$=0,95%
$w_{Si}$=0,3%
$w_{Si}$=0,075%

Beginn
Eingang $w_{Si}$
S100
$v_{AG}=f(w_{Si})$
S110
$v_{He}=f(w_{Si})$
S120
$v_{IG}=100\% - v_{AG} - v_{He}$
S130
Ausgang $v_{AG}, v_{He}, v_{IG}$
S140
Ende

FIG. 4

Beginn
S100 - S140
S200
Probenaht
S210
S220
Schlacke
o.k.?
j
n
Variation $v_{AG}$
S230
S130 - S140
S235
Probenaht
S240
S250
sonst.
Qualität
o.k.?
j
n
Variation $v_{He}$
S260
S130 - S140
S265
Probenaht
S270
Ende

FIG. 5

5
36
34
32
30
28
26
Mix
ECU
38
42
E/A
40
44
4
2
22
24
IG
20
16
18
HE
14
10
12
AG
8
6

FIG. 6

Eingang 1
- Manuell/Off/Auto
- Auswahl $w_{Si}$
- Anpassung $v_{AG}$
- Anpassung $v_{He}$
- Auswahl AG
Eingang 2
- $v_{AG}$ - Ist
- $v_{HE}$ - Ist
Eingang 3
- $w_{Si}$
- Drahttyp
Logik
Speicher
- Wertetabellen
- Routinen
- Funktionen
Ausgang 1
- Power On/Off
- Auto Wahl/Pas/Neg
- $v_{AG}$ - Soll (-Ist)
- $v_{HE}$ - Soll (-Ist)
Ausgang 2
- $v_{AG}$ - Soll
(- $v_{O_2}$ - Soll
- $v_{CO_2}$ - Soll)
- $v_{He}$ - Soll
- $v_{IG}$ - Soll
(- $x_{O_2/CO_2}$ - Soll)
38
42
44
46
48
50
52
54
56
58
60
62
64
66


FIG. 7

On
Auto
% Si
0
0,2
0,4
0,6
0,8
1,0
1,2
1,4
Off
Auto
88,88
88,88
% AG
% He
AG: $O_2$
$CO_2$
0
+
-
70
72
68
69
74
76
78
79
80
81
82
40
42

FIG. 8

SG
86
88
84
92
V
90
S
36
94
34
46

FIG. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1714728 A2
- US 4871898 A
- EP 0494521 A1
- WO 03020465 A1
- US 2753427 A
- US 2958756 A
- US 3496323 A
- US 4626646 A
- EP 1607168 A1
- WO 9834751 A1


### In der Beschreibung aufgeführte Nicht-Patentliteratur


- **AUS MENZEL M.** *Welding International,* 2003, vol. 17 (4), S.262-264